(19) **Europäisches Patentamt / European Patent Office / Office européen des brevets**

(11) **EP 4 437 385 B1**

(12) **FASCICULE DE BREVET EUROPÉEN**

(45) Date de publication et mention de la délivrance du brevet:
**26.02.2025 Bulletin 2025/09**

(21) Numéro de dépôt: **23786641.3**

(22) Date de dépôt: **26.09.2023**

(51) Classification Internationale des Brevets (IPC):
**G05B 9/03** (2006.01)

(52) Classification Coopérative des Brevets (CPC):
**G05B 9/03**

(86) Numéro de dépôt international:
**PCT/FR2023/051476**

(87) Numéro de publication internationale:
**WO 2024/069093 (04.04.2024 Gazette 2024/14)**

(54) **PROCÉDÉ DE COUPLAGE POUR DISPOSITIFS D'ASSERVISSEMENT REDONDANTS D'UN SYSTÈME DE COMMANDE D'UN ACTIONNEUR, SYSTÈME ET DISPOSITIF ASSOCIÉS**

**KOPPLUNGSVERFAHREN FÜR REDUNDANTE SERVOVORRICHTUNGEN EINES AKTUATORSTEUERUNGSSYSTEMS, ZUGEHÖRIGES SYSTEM UND VORRICHTUNG**

**COUPLING METHOD FOR REDUNDANT SERVO DEVICES OF AN ACTUATOR CONTROL SYSTEM, ASSOCIATED SYSTEM AND DEVICE**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.09.2022 FR 2209922**

(43) Date de publication de la demande:
**02.10.2024 Bulletin 2024/40**

(73) Titulaire: **Zipair**
**13220 Chateauneuf-les-Martigues (FR)**

(72) Inventeurs:
• **ZAPATA, Frankie**
**13620 CARRY-LE-ROUET (FR)**
• **AULAGNIER, Laurent**
**13008 MARSEILLE (FR)**
• **BIGHELLI, Frédéric**
**83560 RIANS (FR)**
• **IMBERT, Benoît**
**13009 MARSEILLE (FR)**
• **UHL, Adrien**
**13290 AIX-EN-PROVENCE (FR)**

(74) Mandataire: **Brun, Philippe Alexandre Georges**
**MED'iNVENT CONSULTING**
**Espace Mistral - Bât.A**
**297 avenue du Mistral**
**ZI ATHELIA IV**
**13705 La Ciotat Cedex (FR)**

(56) Documents cités:
**EP-A1- 0 645 026**

**Description**

L'invention concerne le domaine des systèmes d'asservissement d'un actionneur. On entend par « système d'asservissement » tout système conçu pour atteindre le plus rapidement possible une valeur de consigne et la maintenir quelles que soient les perturbations engendrées par l'environnement du système dans la mesure du possible. L'invention concerne plus particulièrement le domaine de tels systèmes d'asservissement lorsque ces derniers sont dits « redondés » ou « à redondance multiple » pour être exploités par exemple dans des véhicules terrestres, nautiques ou aériens. Le document EP0645026A1 illustre l'état de la technique.

L'invention sera décrite principalement, sans pour autant que cela engendre une quelconque limitation à la présente invention, dans le cadre du contrôle de vols d'un aéronef, qu'un pilote soit présent dans ledit aéronef ou distant de celui-ci comme cela peut être le cas pour un drone. Un tel aéronef se présente généralement sous la forme d'un dispositif de propulsion, préférentiellement mais non limitativement à propulsion verticale, adapté ou agencé pour assurer des élévations et déplacements d'une charge que celle-ci soit constituée d'un pilote, d'un ou plusieurs passagers humains ou animaux et/ou d'une ou plusieurs marchandises solides ou fluides dont le dispositif de propulsion assurerait le transport.

Le principe d'un asservissement d'une grandeur ou d'une caractéristique de celle-ci consiste généralement à mesurer ladite grandeur produite par un système et à la comparer à une valeur de consigne. Pour que ladite grandeur produite atteigne le plus rapidement la valeur cible déterminée par la valeur de consigne puis se maintienne, ladite consigne est corrigée à la lumière de l'écart entre la valeur produite par le système et ladite valeur de consigne. Certains systèmes de commande par asservissement agissent sur une ou plusieurs caractéristiques d'une telle grandeur asservie telles que la position, la vitesse ou encore l'accélération. De tels systèmes sont pour cette raison parfois qualifiés de systèmes de commande « par rétroaction négative » ou « par contreréaction » ou encore « en boucle fermée ». Il est également possible d'asservir différentes grandeurs et/ou caractéristiques de ces dernières pour produire *in fine* une commande d'un actionneur. Les notions de stabilité et de précision sont souvent antagonistes de la notion de rapidité. Pour améliorer les performances d'un système d'asservissement, il est généralement nécessaire d'adjoindre un correcteur dans la boucle d'asservissement. Il existe différents types de correcteurs dont l'action peut être intégrale, dérivée et/ou proportionnelle à l'écart mesuré entre grandeur asservie et consigne. On parle alors de « correcteur PID », acronyme de « Proportionnel, Intégral, Dérivé ». Un tel régulateur est paramétré au moyen de gains ou de coefficients pour pondérer les actions correctives respectivement proportionnelle audit écart, à l'intégrale et à la dérivée de ce dernier. L'action que nous pouvons qualifier de « proportionnelle » contribue directement à la réactivité et à la stabilité de l'asservissement. L'action « intégrale » permet de gommer une erreur résiduelle et apporte de la précision au système et l'action « dérivée » permet de limiter des oscillations autour du point de consigne de la grandeur asservie.

Par ailleurs, selon la fiabilité recherchée, notamment pour constituer des systèmes exploités dans le transport terrestre, maritime, aéronautique et/ou spatial, de tels systèmes d'asservissement peuvent être à redondance multiple et nécessiter une pluralité de dispositifs d'arbitrage d'une telle redondance multiple.

En ingénierie, la notion de « redondance » consiste en la duplication de composants ou de fonctions critiques d'un système dans le but d'augmenter la fiabilité dudit système. Lorsque que la sécurité d'éventuels passagers est en jeu, comme cela peut être le cas durant un vol d'un aéronef, certaines parties d'un système de commande de ce dernier peuvent être doublées ou triplées, on parle alors de système à double ou triple redondance. Ainsi, une erreur générée par un élément liée par exemple à un dysfonctionnement ou une dérive de performances dudit élément peut alors être annulée ou compensée par l'exploitation de l'un ou des autres éléments redondants. Un système à redondance multiple est également connu sous l'appellation « système de vote/logique majoritaire » ou « système à logique de vote » pour exploiter une multiple production d'une même grandeur en vue de commander un actionneur par exemple.

Il existe plusieurs modes d'exploitation d'un système d'asservissement d'un actionneur à redondance multiple. Prenons l'exemple d'un système de commande d'un actionneur exploitant trois systèmes d'asservissement similaires, dits « systèmes pairs » ou « systèmes redondants », produisant respectivement, c'est-à-dire en parallèle les uns des autres, des grandeurs devant être le reflet d'une même valeur de consigne. La commande de l'actionneur est produite *in fine* à partir d'une seule ou de plusieurs grandeurs produites par lesdits systèmes redondants. Selon un premier mode d'exploitation connu, la commande d'un tel actionneur est produite à partir d'une grandeur produite par l'un des trois systèmes d'asservissement, que l'on qualifie parfois de « maître ». Ce n'est que lorsque l'on constate que ledit maître dysfonctionne, un tel dysfonctionnement pouvant être détecté par un trop grand écart entre la grandeur délivrée par ledit maître et la moyenne des grandeurs délivrées respectivement par ses pairs, que le système de commande ou un opérateur dudit système de commande élit un nouveau maître parmi ces systèmes d'asservissement redondants en remplacement du précédent. Cette solution peut devenir sous-optimale lorsque les valeurs de la grandeur asservie produites respectivement par les systèmes d'asservissement redondants divergent. La réassignation d'un système maître, lorsque que les trois systèmes d'asservissement redondants expriment des grandeurs de valeurs très disparates, devient délicate car il n'est plus possible de juger d'un éventuel dysfonctionnement ou dérive dudit maître courant si aucun consensus n'apparaît parmi les autres systèmes redondants. D'autres techniques consistent à calculer la moyenne des grandeurs produites respectivement par les systèmes d'asservissement redondants et à produire une commande d'actionneur à partir de ladite moyenne. Ce deuxième mode de réalisation est parfois problématique notamment lorsque l'un des systèmes délivre une grandeur dont la valeur s'éloigne très fortement de celles produites par ses pairs. En effet, la moyenne obtenue pâtie de la dérive franche dudit système défaillant devenant elle-même très éloignée d'une valeur pertinente pour produire *in fine* une commande d'actionneur adaptée

L'invention permet de résoudre les inconvénients précédemment exprimés. Parmi les nombreux avantages procurés par la mise en œuvre de l'invention, nous pouvons mentionner

- la correction automatique de la production d'un dispositif d'asservissement au regard de celles de dispositifs d'asservissement pairs au sein d'un système de commande à redondance multiple prévient le risque de divergence des productions et accroît la pertinence de ces dernières ;

- la distribution au sein d'un système de commande de l'arbitrage et/ou de la correction des productions redondantes fiabilise ce dernier sans engendrer de complexité ou obérer la réactivité de la production de commande d'actionneur ;

- une correction fine et adaptative des productions redondantes au regard des caractéristiques des signaux ou données produits améliorant la précision et la pertinence des commandes générées sans grever la réactivité, accroître le coût et la complexité d'un système mettant en œuvre l'invention ;

- la préconisation de la médiane pour tenir compte des productions respectives d'au moins trois dispositifs d'asservissement redondants et des latences engendrées par le partage des informations entre lesdits dispositifs d'asservissement redondants, apporte un compromis particulièrement pertinent lors de productions de valeurs aberrantes ou divergentes.

A cette fin, l'invention prévoit un procédé mis en œuvre par une unité de traitement d'un dispositif d'asservissement parmi plusieurs dispositifs d'asservissement redondants d'un système de commande d'un actionneur, chaque dispositif d'asservissement redondant produisant respectivement des valeurs d'une même grandeur à partir d'une même consigne et d'une même donnée de mesure, lesdites valeurs produites étant exploitées par ledit système pour commander l'actionneur, lesdits dispositifs d'asservissement redondants étant mutuellement en communication de sorte que chaque dispositif d'asservissement redondant accède en lecture aux dernières valeurs de ladite grandeur produites par lesdits dispositifs d'asservissement redondants.
Pour prévenir toute dérive des productions respectives des valeurs de la grandeur, ledit procédé comporte itérativement :

- une étape de production de la valeur courante de grandeur à partir de la consigne et de la donnée de mesure ;
- une étape de lecture des dernières valeurs connues de la grandeur produites par les dispositifs d'asservissement redondants dudit système de commande et de constitution d'un ensemble de valeurs courantes de ladite grandeur ;
- une étape de détermination d'une valeur de référence de ladite grandeur tirée dudit ensemble ;
- une étape de calcul d'un écart entre la valeur courante de la grandeur produite et ladite valeur de référence ;
- une étape de correction de la valeur courante et de production d'une valeur courante corrigée de la grandeur consistant à retrancher à ladite valeur courante un correctif résultant d'un calcul selon lequel ledit écart est multiplié par un coefficient de correction supérieur à zéro de ladite valeur courante

Pour accroître la pertinence de la valeur de la grandeur produite, lorsque ledit système de commande comporte au moins trois dispositifs d'asservissement redondants en capacité de produire une telle valeur de ladite grandeur, l'étape de détermination de la valeur de référence consiste avantageusement en le choix de la médiane des valeurs de l'ensemble des valeurs courantes de la grandeur.
En variante, lorsque ledit système de commande ne comporte que deux dispositifs d'asservissement redondants en capacité de produire une telle valeur de ladite grandeur, l'étape de détermination de la valeur de référence peut consister à choisir l'une des valeurs de l'ensemble de valeurs courantes de la grandeur.
Pour définir le couplage de la production des dispositifs d'asservissement redondants, la valeur du coefficient de correction peut être prédéterminée.
En variante, un tel couplage peut être dynamique. Pour cela, un procédé conforme à l'invention peut comporter une étape d'enregistrement de la valeur courante ou corrigée de la grandeur produite dans une mémoire de données du dispositif d'asservissement pour constituer un historique d'un nombre déterminé de valeurs. Un tel procédé comporte alors, préalablement à l'étape de correction, une étape de production de la valeur du coefficient de correction qui est fonction de la variabilité des valeurs tirées dudit historique et de la fréquence d'itération de l'étape de lecture des dernières valeurs connues de la grandeur produites par les dispositifs d'asservissement redondants.

Par ailleurs, pour prévenir toute correction brutale, voire adoucir le processus de correction de la production des valeurs de la grandeur, le calcul de la valeur du correctif est agencé pour que ladite valeur du correctif n'excède pas en valeur absolue une valeur limite prédéterminée.

Selon un mode de réalisation préféré selon lequel les dispositifs d'asservissement redondants comportent chacun un correcteur PID délivrant trois composantes d'un signal de sortie décrivant respectivement une action proportionnelle, une action intégrale et une action dérivée, la grandeur peut consister en la composante décrivant ladite action intégrale dudit correcteur PID.

Pour accroître la fiabilité d'un système de commande d'actionneur, ce dernier peut comporter des sources redondantes agencées pour délivrer conjointement une pluralité de valeurs de consigne. Un procédé selon l'invention peut avantageusement comporter une étape pour produire la consigne de sorte que celle-ci prenne pour valeur :

- l'une des valeurs de ladite pluralité de valeurs lorsque le système de commande ne comporte que deux sources redondantes ;

- la médiane de ladite pluralité de valeurs lorsque ledit système de commande comprend au moins trois sources redondantes.

Pour accroître la fiabilité d'un système de commande d'actionneur, ce dernier peut comporter des sources redondantes agencées pour délivrer conjointement une pluralité de valeurs de donnée de mesure. Un procédé selon l'invention peut avantageusement comporter une étape pour produire la donnée de mesure de sorte que cette dernière prenne pour valeur :

- l'une des valeurs de ladite pluralité de valeurs lorsque le système de commande ne comporte que deux sources redondantes ;

- la médiane de ladite pluralité de valeurs lorsque le système de commande comporte au moins trois sources redondantes.

Selon un deuxième objet, l'invention concerne un dispositif d'asservissement parmi plusieurs dispositifs d'asservissement redondants d'un système de commande d'un actionneur, lesdits dispositifs d'asservissement redondants produisant chacun une valeur d'une même grandeur à partir d'une même consigne et d'une même donnée de mesure, lesdits dispositifs d'asservissement redondants étant en outre mutuellement en communication de sorte que chaque dispositif d'asservissement accède en lecture aux dernières valeurs de ladite grandeur produites par les dispositifs d'asservissement redondants. Ledit dispositif d'asservissement est agencé pour mettre en œuvre un procédé selon l'invention.

Selon un troisième objet, l'invention concerne un système de commande d'un actionneur comportant plusieurs dispositifs d'asservissement redondants conformes à la revendication précédente, ladite commande d'actionneur étant produite à partir de la pluralité de valeurs de la grandeur produites conjointement par les dispositifs d'asservissement redondants.

Selon un mode de réalisation avantageux, ledit système de commande peut être agencé de sorte que ladite commande puisse être produite à partir de :

- l'une des valeurs de ladite pluralité de valeurs de la grandeur de produites par les dispositifs d'asservissement redondants lorsque ladite pluralité de valeurs ne comprend que deux valeurs ;

- la médiane de ladite pluralité de valeurs de la grandeur produite si ladite pluralité de valeurs comprend au moins trois valeurs.

Selon un quatrième objet, l'invention concerne un véhicule d'une charge constituée d'un pilote, d'un passager et/ou de biens ou de marchandises comportant un ou plusieurs actionneurs sous la forme d'au moins un groupe de poussée pour mouvoir ledit véhicule dont une commande est produite par un système de commande selon l'invention.

Selon un mode d'application préféré, un tel véhicule peut être un aéronef.

Selon un cinquième objet, l'invention concerne en outre un produit programme d'ordinateur comportant une ou plusieurs instructions de programme interprétables par une unité de traitement d'un dispositif d'asservissement parmi une pluralité de dispositifs d'asservissement redondants d'un système de commande d'un actionneur conforme à l'invention. Pour cela, lesdites instructions de programme sont chargeables dans une mémoire non volatile du dispositif d'asservissement et conçues de sorte que leur exécution par ladite unité de traitement provoque la mise en œuvre d'un procédé conforme à l'invention.

Selon un sixième objet, l'invention concerne un support de mémorisation lisible par une telle unité de traitement comportant les instructions d'un tel produit programme d'ordinateur.

D'autres caractéristiques et avantages apparaîtront plus clairement à la lecture de la description qui suit et à l'examen des figures qui l'accompagnent parmi lesquelles :

- la figure 1 illustre un premier dispositif connu de propulsion, agencé pour fournir une capacité de décollage et d'atterrissage sensiblement verticaux ;

- la figure 2 illustre l'agencement d'un système de poussée d'un tel dispositif de propulsion connu et illustré par les figures 1 et 1A;
- la figure 3 illustre l'agencement d'une unité de consigne comportant une interface homme-machine d'entrée pour traduire des instructions humaines de pilotage d'un aéronef, tels que celui décrit en lien avec les figures précédentes ;
- la figure 4 illustre l'exemple d'une architecture fonctionnelle d'un contrôleur de vol destiné à équiper un drone ;
- la figure 5 illustre un exemple d'architecture fonctionnelle d'un système selon l'invention de commande d'un actionneur tel qu'un groupe de poussée d'un aéronef comportant une pluralité de contrôleurs de vol redondants et éventuellement similaires au contrôleur de vol illustré par la figure précédente ;
- la figure 6 illustre une description fonctionnelle d'un exemple d'un procédé de correction d'une donnée produite par un dispositif d'asservissement d'un système de commande d'un actionneur tel que celui décrit par la figure 5 ;
- la figure 7 illustre un premier apport remarquable procuré par la mise en œuvre de l'invention en lien avec la production d'une commande d'actionneur de tangage par un système de commande conforme à la figure 5 ;
- la figure 7A illustre un deuxième apport procuré par la mise en œuvre de l'invention en lien avec une telle commande d'actionneur de tangage produite par un système de commande conforme à la figure 5 ;
- la figure 8 illustre le remarquable apport procuré par la mise en œuvre de l'invention en lien avec une commande d'actionneur de roulis produite par un système de commande également conforme à ladite figure 5.

Décrivons préférentiellement mais non limitativement l'invention au travers d'un exemple d'application au domaine du contrôle de vol d'un aéronef ou d'un aérodyne agencé pour offrir une capacité de décollage et d'atterrissage sensiblement verticaux. A titre d'exemples non limitatifs, un tel dispositif de propulsion peut consister en un drone, un quadricoptère ou octocoptère. Le document EP 3495262 A1 décrit un exemple d'un tel dispositif de propulsion. L'invention ne saurait toutefois être limitée à ces seuls exemples d'application et pourrait être, en lieu et place, employée en lien avec tout type de dispositif de propulsion d'une charge, d'un pilote ou d'un passager.

Selon l'invention, un tel aéronef à décollage/atterrissage vertical est mû par une pluralité de groupes de poussée. Il se distingue de celui tiré du document EP3495262A1 en ce que les commandes d'actionnement respectives desdits groupes de poussée sont produites par un système de commande à redondance multiple.

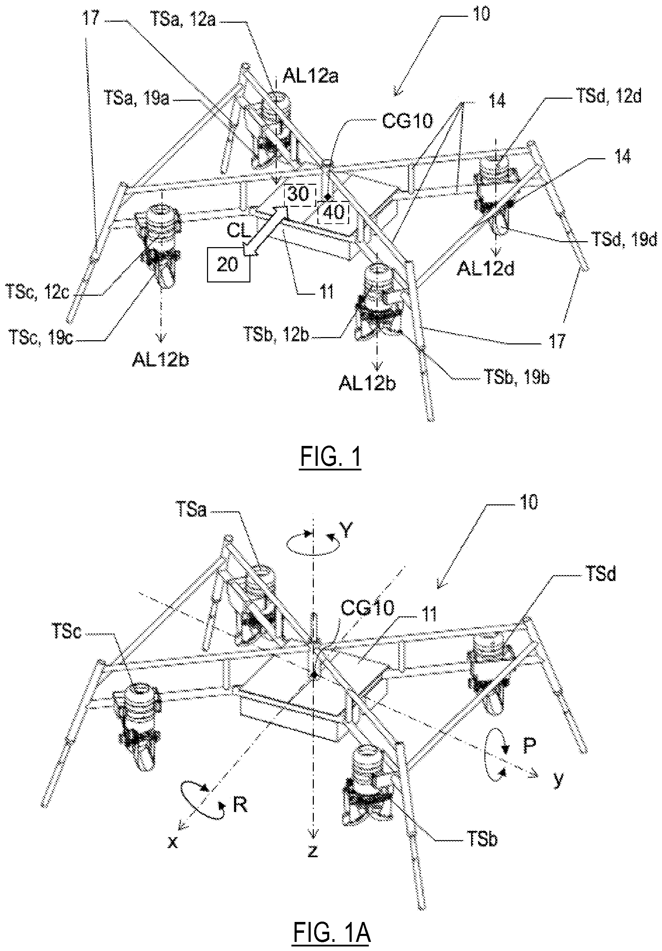

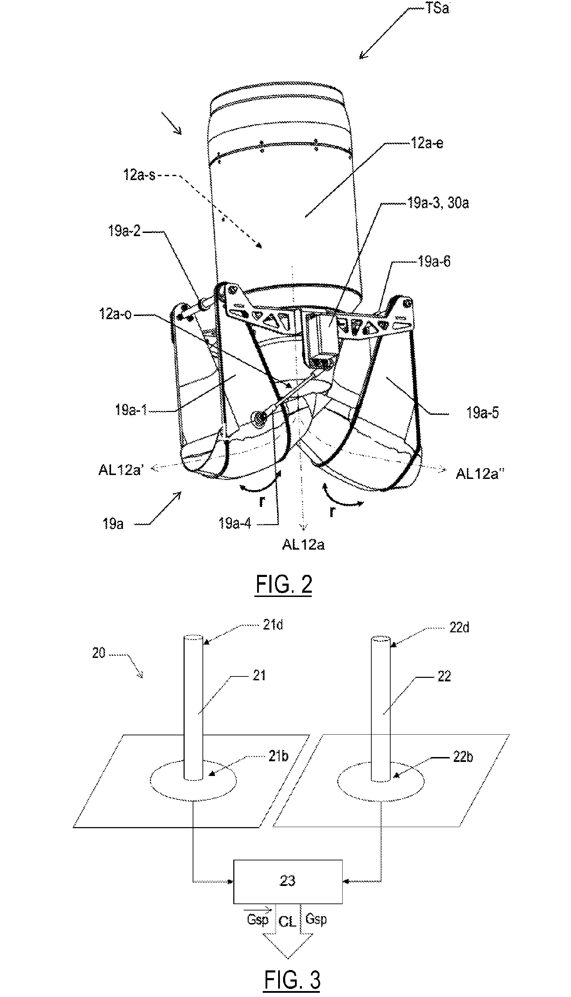

Comme l'indique la figure 1, un tel aéronef 10 permettant l'élévation d'une charge véhiculée par ce dernier selon l'enseignement technique tiré du document EP 3495262 A1, consiste en un quadricoptère comportant des moyens supports 14 de propulseurs, lesdits moyens supports 14 se présentant sous la forme de quatre bras décrivant un 'X' au-dessus d'une plate-forme 11 sensiblement plane. Chaque bras supporte un système de poussée TSa, TSb, TSc, TSd comportant chacun un groupe de poussée 12a, 12b, 12c, 12d composé d'un propulseur thermique sous la forme d'un turboréacteur. Pour élever une charge, non représentée sur la figure 2, véhiculée par la plate-forme 11, les quatre groupes de poussée 12a, 12b, 12c, 12d délivrent respectivement des vecteurs de poussée AL12a, AL12b, AL12c, AL12d, sensiblement normaux à la plate-forme 11. Pour atterrir sans endommager les tuyères ou sorties d'éjection de fluide des turboréacteurs des groupes de poussée 12a à 12d, les bras des moyens supports 14 des systèmes de poussée TSa, TSb, TSc et TSd coopèrent, au niveau de leur parties distales respectives, avec des moyens saillants ou pieds avantageusement télescopiques 17. Un système de commande 30, sous la forme de moyens de traitement électroniques, délivre des commandes de poussée aux systèmes de poussée TSa, TSb, TSc, TSd, par exemple sous la forme de signaux MIP (acronyme de modulation d'impulsions en position ou PPM acronyme anglo-saxon de pulse-position modulation) selon une technique de modulation connue pour transmettre sur une liaison « point-à-point » un symbole d'une pluralité de bits en une seule impulsion codée parmi un alphabet de 2M transitions possibles dans le temps ou tout autre format approprié. Les sorties de fluides des propulseurs des systèmes de poussée sont positionnées au-dessus ou en-dessous, sensiblement au niveau du centre de gravité CG10 du dispositif 10 selon la configuration et l'agencement des moyens supports 14. Pour modifier et stabiliser l'assiette de la plate-forme 11, chaque système de poussée TSa à TSd comporte des moyens de correction 19a, 19b, 19c, 19d des vecteurs de poussée AL12a, AL12b, AL12c, AL12d délivrés respectivement par les turboréacteurs des groupes de poussée 12a à 12d.

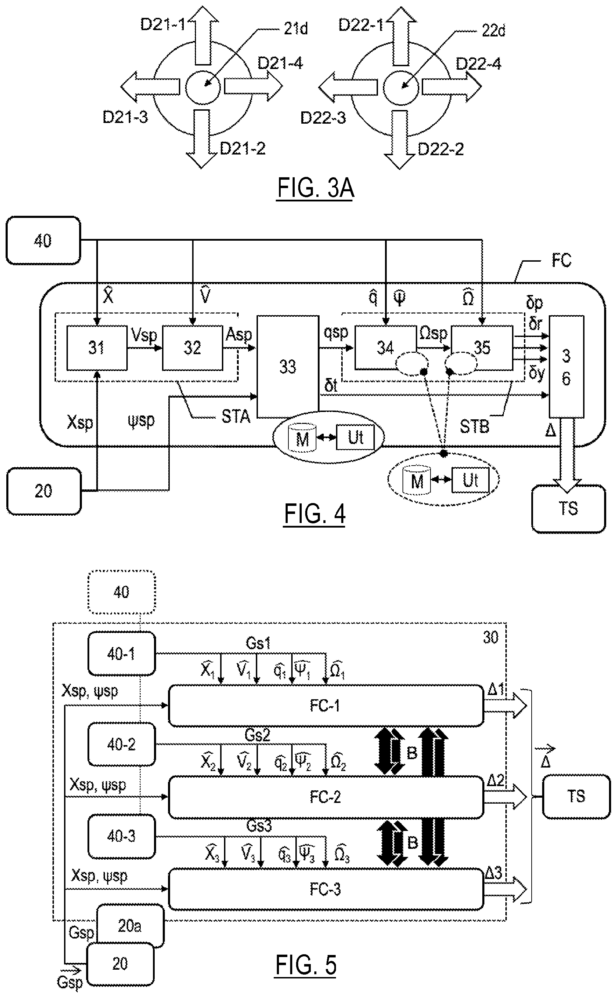

La figure 2 illustre l'agencement de tels moyens correcteurs de vecteur de poussée 19a du groupe de poussée 12a du système de poussée TSa selon la figure 1. Lesdits moyens 19a correcteurs de vecteur de poussée comportent une paire de guides déflecteurs 19a-1 et 19a-5 montés mobiles, plus précisément via des liaisons pivots respectives 19a-2 et 19a-6. Lesdits guides déflecteurs 19a-1 et 19a-5 sont agencés pour dévier tout ou partie du vecteur de poussée AL12a au niveau d'une région proche de la sortie d'éjection de fluide 12a-o du turboréacteur 12a-e du groupe de poussée 12a. L'ensemble déflecteur composé des guides déflecteurs 19a-1 et 19a-5 permet ainsi de décrire un « pincement » dudit vecteur de poussée AL12a. Les guides déflecteurs 19a-1 et 19a-5 sont avantageusement actionnés respectivement par une paire d'actionneurs à came ou servomoteurs, dont seul l'actionneur 19a-3 est visible sur la figure 1. Ainsi, l'actionneur 19a-3 coopère via une bielle 19a-4 avec le guide déflecteur 19a-1. L'actionnement de la came de l'actionneur 19a-3 provoque un mouvement rotatif r du guide déflecteur 19a-1 autour de l'axe 19a-2 situé au-dessus de la région d'éjection de fluide du turboréacteur 12a, ce qui réduit le couple nécessaire à l'actionneur 19a-3 pour surmonter et résister à l'aspiration ou au rejet généré par le vecteur de poussée AL12a délivré par le turboréacteur 12a-e du groupe de poussée 12a lors de la fermeture et de l'ouverture du guide déflecteur 19a-1. Lorsque les actionneurs à came, tel que l'actionneur 19a-3, associés respectivement aux guides déflecteurs 19a-1 et 19a-5 provoquent un pincement du vecteur de poussée AL12a par ces derniers, ledit vecteur de poussée AL12a se subdivise en aval desdits guides déflecteurs en deux ou trois composantes AL12a, AL12a', AL12a" selon que tel ou tel guide déflecteur 19a-1 ou 19a-5 pénètre ou non le flux éjecté à la sortie de fluide 12a-o du turboréacteur 12a-e. Dans une configuration « ouverte » selon laquelle les guides déflecteurs 19a-1 et 19a-5 sont positionnés sensiblement hors de la trajectoire du vecteur de poussée AL12a, la force dudit vecteur de poussée AL12a est maximale. En revanche, lorsque l'un des deux (ou les deux) guides déflecteurs 19a-1, 19a-5 « pince » ledit vecteur de poussée, la force de poussée résultante dudit vecteur de poussée AL12a, en aval desdits guides déflecteurs 19a-1 et 19a-5, s'en trouve réduite, jusqu'à être annulée lors d'un « pincement total » desdits guides déflecteurs 19a-1 et 19a-5 du flux en sortie de tuyère 12a-o du turboréacteur. Selon l'agencement desdits guides déflecteurs 19a-1 et 19a-5, ces derniers s'apparentant sur la figure 3 à deux coupelles ou surfaces semi-circulaires sensiblement curvilignes se faisant face, il peut résulter dans le cas d'une configuration « fermée » des deux guides 19a-1 et 19a-5, une contrepoussée, c'est-à-dire un vecteur de poussée d'une direction opposée à celle du vecteur de poussée AL12a à la sortie d'éjections de fluide 12a-o. Une telle contrepoussée, par exemple de l'ordre de dix à trente pourcents, peut être rendue possible grâce à morphologie desdits guides. En effet, ces derniers peuvent être agencés pour guider respectivement des écoulements fluidiques provoquant en sortie (parties distales) desdits guides, des vecteurs de poussée secondaires AL12a' et AL12a" orientés selon des directions sensiblement opposées à la direction du vecteur de poussée originel AL12a en sortie d'éjection de fluide 12a-o du turboréacteur 12a-e.

En variante, les systèmes de poussée TSa à TSd de l'aéronef 10 pourraient consister chacun en une hélice mue en rotation par un moteur électrique et/ou thermique pour délivrer une poussée équivalente à celle décrite par un système de poussée à base d'un turboréacteur comme décrit en lien avec les figures 1 et 1A. Quels que soient les modes de réalisation d'un système de poussée d'un dispositif de propulsion, un système de commande électronique 30 pilote les puissances respectives des systèmes de poussée TSa à TSd à partir de mesures délivrées par une centrale inertielle 40 avantageusement positionnée à proximité du centre de gravité CG10 de l'aéronef 10 et de consignes de pilotage délivrées par une unité de consigne 20 en communication CL, filaire ou radio, avec le système de commande 30. Ce dernier traduit ainsi les directives du pilote, via l'unité de consigne 20, en commande d'actionneurs (propulseurs, déflecteurs) pour réguler les poussées respectivement délivrées par les systèmes de poussée TSa à TSd provoquant la trajectoire de l'aéronef 10 requise par ledit pilote au regard de l'attitude et de la position dudit aéronef estimées par l'unité de mesure 40.

La figure 1A décrit un tel aéronef 10 à la lumière d'un référentiel déterminé par trois axes x, y, z respectivement inscrits dans le plan de la plate-forme 11 pour les axes x et y et normal à cette dernière pour l'axe z. Les trois axes x, y et z sont sécants en le centre de gravité CG10 de l'aéronef 10. L'axe x s'étend de la poupe à la proue de l'aéronef et l'axe y s'étend de tribord à bâbord. L'axe z décrit une verticale, du lointain vers le sol, lorsque la plate-forme est horizontale. Un tel aéronef 10 peut se mouvoir dans les airs selon des rotations R, P, Y provoquées respectivement autour desdits axes x, y et z par le système de commande 30 régulant à dessein les poussées respectives délivrées par les groupes de poussée TSA à TSd. Ainsi, une élévation verticale de l'aéronef 10 est provoquée par une augmentation conjointe et identique des poussées délivrées par les quatre groupes de poussée TSa à TSd, augmentation suffisante pour créer une force de portance supérieure au poids de l'aéronef 10. Réciproquement, un déplacement vertical de haut en bas de l'aéronef s'obtient par une réduction conjointe et identique des poussées délivrées par les quatre groupes de poussée TSa à TSd pour créer une force de portance inférieure au poids de l'aéronef 10.

Pour provoquer un déplacement vers l'avant (proue) ou l'arrière (poupe) de l'aéronef 10, le système de commande 30 induit une différence de poussée entre les couples de groupes de poussée respectivement formés par les groupes de poussée TSa et TSd pour l'un et par les groupes de poussée TSb et TSc pour l'autre. Ainsi, une rotation P, également connue sous l'appellation « tangage » ou « pitch » selon une terminologie anglo-saxonne, autour de l'axe y est provoquée. Une élévation relative et conjuguée du couple {TSa, TSd} au regard du couple {TSb, TSc} provoquée par un différentiel positif de poussée induit un déplacement vers l'avant de l'aéronef. La réciproque induit un déplacement de l'aéronef 10 vers l'arrière.

Pour provoquer un déplacement sur bâbord ou sur tribord, le système de commande 30 induit une différence de poussée entre les couples de groupes de poussée respectivement formés par les groupes de poussée TSa et TSc pour l'un et par les groupes de poussée TSd et TSb pour l'autre. Ainsi, une rotation R, également connue sous l'appellation « roulis » ou « roll » selon une terminologie anglo-saxonne, autour de l'axe x est provoquée. Une élévation relative et conjuguée du couple {TSa, TSc} au regard du couple {TSb, TSd} provoquée par un différentiel positif de poussée induit un déplacement sur bâbord de l'aéronef 10. La réciproque induit un déplacement de l'aéronef 10 sur tribord.

Le système de commande 30 peut également provoquer une rotation Y, également connue sous l'appellation « lacet » ou « yaw » selon une terminologie anglo-saxonne, de l'aéronef autour de l'axe z. Pour cela, le système de commande 30 induit un pincement asymétrique des guides déflecteurs de chaque groupe de poussée TSa à TSd, d'au moins un couple {TSa, TSb} ou {TSc, TSd} de groupes de poussée. En lien avec la figure 2, un tel pincement asymétrique des guides déflecteurs 19a1, 19a-5 du groupe de poussée TSa produit trois composantes de la poussée résultante dudit groupe de poussée qui n'est plus strictement parallèle à la direction d'éjection du fluide du turboréacteur 12a-e et donc normale à la plate-forme mais qui devient oblique au regard de cette dernière sous l'effet conjugué de l'une des composantes AL12a demeurant parallèle à la direction d'éjection du fluide par le turboréacteur 12a-e et de la composante prépondérante parmi les composantes AL12a' ou AL12a" sensiblement normales à ce dernier. Selon que la composante AL12a' soit supérieure ou inférieure à la composante AL12a", une rotation Y autour de l'axe y est provoquée dans un sens horaire ou anti-horaire.

Afin qu'aucune élévation ou perte d'altitude ne soit induise lors d'un lacet, roulis ou tangage, le système de commande 30 provoque une augmentation égale à la diminution des poussées conjuguées délivrées par le ou les couples de groupes de poussée concernés par de tels pincements asymétriques de leurs guides déflecteurs de sorte que la force de portance globale délivrée par l'ensemble des groupes de poussée soit constante.

Pour traduire les instructions du pilote, comme l'indique la figure 3, une unité de consigne 20 peut consister en une interface homme-machine d'entrée comportant des périphériques d'entrée sous la forme d'une paire de manettes ou de leviers 21 et 22, également appelés joysticks selon une terminologie anglo-saxonne. L'invention ne saurait être limitée par ce seul choix de périphériques d'entrée, ces derniers pouvant comprendre en outre ou en variante une pluralité de boutons, une surface tactile ou tout autre moyen équivalent et adapté.

A titre d'exemple selon les figures 3 et 3A (cette dernière décrivant une vue de dessus des joysticks 21 et 22), le joystick 21 permet de détecter quatre déplacements D21-1, D21-2, D21-3, D21-4 de la partie distale 21d du levier 21 au regard de son support 21b :

- un déplacement D21-1 peut traduire une consigne du pilote visant à augmenter la poussée globale de l'aéronef et provoquer un accroissement d'altitude ;

- à l'opposé du déplacement D21-1, un déplacement D21-2 peut traduire une consigne du pilote de réduction de la poussée globale de l'aéronef et provoquer une perte d'altitude ;

- un déplacement D21-3 peut traduire une consigne du pilote de pivotement de l'aéronef 10 dans le sens anti-horaire autour de l'axe z selon la figure 1A ;

- à l'opposé du déplacement D21-3, un déplacement D21-4 peut traduire une consigne du pilote de pivotement de l'aéronef 10 dans le sens horaire autour de l'axe z selon la figure 1A.

Toujours à titre d'exemple selon la figure 3A, le joystick 22 permet de détecter quatre déplacements D22-1, D22-2, D22-3, D22-4 de la partie distale 22d du levier 22 au regard de son support 22b :

- un déplacement D22-1 peut traduire une consigne du pilote visant à provoquer un déplacement vers l'avant de l'aéronef ;

- à l'opposé du déplacement D22-1, un déplacement D22-2 peut traduire une consigne du pilote visant à provoquer un déplacement arrière de l'aéronef ;

- un déplacement D22-3 peut traduire une consigne du pilote visant à provoquer un déplacement sur bâbord de l'aéronef ;

- à l'opposé du déplacement D22-3, un déplacement D22-4 peut traduire une consigne du pilote visant à provoquer un déplacement sur tribord de l'aéronef.

Une unité de consigne 20 comporte en outre des moyens électroniques 23, tels qu'un ou plusieurs microcontrôleurs ou microprocesseurs, pour traduire de tels déplacements des parties distales 21d et 22d des leviers 21 et 22 en signaux électriques de consignes Gsp, ces derniers étant destinés à être acheminés au système de commande 30 par voie radio ou filaire CL. De tels moyens électroniques 23 peuvent être dupliqués en plusieurs moyens redondants et produire conjointement une pluralité de signaux de consignes Gsp.

Ladite unité de consigne 20 peut en outre comporter d'autres organes comme des boutons poussoirs par exemple pour traduire un ordre de démarrage des propulseurs, signifier une perte de capacité du pilote à assurer le pilotage de l'aéronef, basculer d'un mode de pilotage manuel à un mode de pilotage assisté, etc. Lesdits moyens électroniques 23 de l'unité de consigne 20 sont agencés pour communiquer également les informations délivrées par lesdits organes. Ainsi, ladite unité de consigne 20 peut transmettre un signal Gsp, voire une pluralité de signaux $\overrightarrow{Gsp}$ si les moyens 23 sont redondés, par exemple de type PPM, véhiculant un vecteur d'informations parmi lesquelles nous pouvons citer des consignes de position Xsp, de cap/lacet ψsp, des consignes de démarrage ou arrêt du ou des propulseurs, un identifiant de mode de pilotage, etc.

La figure 4 décrit quant à elle un système 30 de commande d'actionneurs TS, par exemple les groupes de poussée TSa à TSd d'un aéronef 10 selon la figure 1. Ledit système de commande 30 intègre ou coopère avec une ou plusieurs centrales inertielles 40 (accéléromètres, gyroscopes, magnétomètres), unités de navigation inertielle (INU, acronyme anglo-saxon de « Inertial Navigation Unit », voire unités de mesures inertielles (IMU, acronyme anglo-saxon de « Inertial Measurement Unit »). Une telle unité de mesure 40 est conçue pour notamment estimer les positions $\hat{X}$, vitesses linéaires $\hat{V}$ ou angulaires $\hat{\Omega}$ de l'aéronef 10. La vitesse linéaire $\hat{V}$, la position $\hat{X}$ peuvent être estimées au regard du référentiel « NED Frame » (pour North-East-Down selon une terminologie anglo-saxonne) déterminé par trois axes orthogonaux dans lesquels un premier axe pointe vers le nord géographique, un deuxième axe pointe vers le centre de la terre et le troisième axe pointe vers l'est. L'attitude $\hat{\Psi}$ et quaternion $\hat{q}$ ainsi que toute vitesse angulaire $\hat{\Omega}$ de l'aéronef sont généralement estimés au regard d'un référentiel propre à l'aéronef 10 tel que celui illustré par les axes x, y, z sur la figure 1A. Lesdites vitesses linéaires et lesdites positions sont éventuellement corrigées par un filtre de Kalman.

Le système de commande 30 comporte un ou plusieurs contrôleurs de vol FC dont le rôle est d'intégrer les mesures délivrées par la ou les unités de mesure 40 et les consignes de pilotage délivrées par l'unité de consigne 20 pour délivrer à chaque groupe de poussée TSa à TSd (ou plus généralement à un actionneur TS) une commande Δ, par exemple sous la forme d'un signal PPM ou équivalent, pouvant véhiculer principalement des composantes relatives au tangage δp, au roulis δr, au lacet δy, à la puissance/poussée δt.

La figure 4 dépeint plus précisément un schéma de principe d'une architecture d'un contrôleur de vol FC pour aéronef tel que le drone 10 illustré par la figure 1. Selon cet exemple, ledit contrôleur de vol FC comporte une pluralité de dispositifs de contrôle constituant deux principaux étages, référencés STA et STB sur la figure 4. L'étage STA est chargé de réguler la position de l'aéronef dans le référentiel « NED Frame ». Selon l'exemple illustré par la figure 4, l'étage STA produit globalement une accélération de consigne Asp à partir, d'une part, de mesures émanant d'une unité de mesure 40, en l'espèce des estimations de la position $\hat{X}$ et de la vitesse linéaire $\hat{V}$ de l'aéronef et, d'autre part, de consignes de position Xsp délivrées par une unité de consigne 20 telle que celle précédemment décrite en lien avec les figures 3 et 3A.

L'étage STB est, quant à lui, chargé de réguler la position de l'aéronef dans un référentiel, dit « Body frame » selon une terminologie anglo-saxonne, propre à la plate-forme de l'aéronef 10 tel qu'illustré par les axes x, y, z sur la figure 1A pour délivrer des composantes de commande d'actionneur Δ relatives au tangage δp, au roulis δr, au lacet δy à partir, d'une part, de la production de l'étape STA (accélération de consigne Asp), des consignes de cap/lacet ψsp émanant de l'unité de commande et, d'autre part, de mesures délivrées par l'unité de mesure 40 en termes d'attitude $\hat{\Psi}$, de quaternion $\hat{q}$, et de vitesse angulaire $\hat{\Omega}$. Pour ce faire, une interface 33 assure une transposition de repères de sorte que l'accélération de consigne Asp et les consignes de cap/lacet ψsp soient traduites en un quaternion de consigne qsp et en une composante δt de la commande Δ relative à la puissance/poussée.

Chaque étage STA et STB peut être « cadencé » selon des périodes ou fréquences distinctes. Les fréquences de régulations mises en œuvre par les deux étages principaux STA et STB peuvent être de cinquante hertz pour l'étage STA et de deux-cent-cinquante à mille hertz pour l'étape STB.

Selon l'exemple illustré par la figure 4, chacun desdits étages STA et STB comporte deux dispositifs de contrôle respectivement 31, 32 pour l'étage STA et 34, 35 pour l'étage STB.

Le dispositif de contrôle 31 de la position de l'aéronef délivre une vitesse de consigne Vsp à partir de l'écart entre une position de consigne Xsp et une position estimée $\hat{X}$. Cette vitesse de consigne Vsp est alors comparée par le dispositif de contrôle 32 à la vitesse linéaire estimée $\hat{V}$ par l'unité de mesure 40 afin de produire l'accélération de consigne Asp précédemment évoquée.

De son côté, le dispositif de contrôle d'attitude 34 de l'étage STB délivre une vitesse angulaire de consigne Ωsp en comparant le quaternion de consigne qsp et les estimations du quaternion $\hat{q}$ et de l'attitude $\hat{\Psi}$ délivrées par l'unité de mesure 40. Cette vitesse angulaire de consigne Ωsp est alors comparée à la vitesse angulaire de l'aéronef estimée $\hat{\Omega}$ par ladite unité de mesure 40 pour in fine produire les composantes du vecteur de commande Δ relatives au tangage δp, au roulis δr et au lacet δy par le dispositif de contrôle de vitesse angulaire 35 de l'étage STB.

De manière avantageuse, les dispositifs de contrôle de position 31 et d'attitude 34 génèrent des sorties respectives proportionnelles aux écarts séparant leurs entrées. En revanche, les dispositifs de contrôle 32 et 35 de vitesses linéaires et angulaires produisent des sorties à partir de composantes décrivant des actions correctives respectivement proportionnelle à l'écart entre leurs entrées, à l'intégrale et à la dérivée dudit écart par exemple en ayant recours à un régulateur PID. Chaque dispositif de contrôle peut avantageusement comporter sa propre unité de traitement Ut (par exemple, sous la forme d'un ou plusieurs microprocesseurs ou microcontrôleurs coopérant avec une mémoire M de données et/ou de programmes) qui échantillonne, selon une périodicité donnée, les mesures et/ou consignes délivrées par l'unité de mesure 40 et/ou l'unité de consigne 20 ou plus généralement par des sources délivrant des consignes ou des données de mesure. Une telle source, que nous pouvons nommer « source de consigne », peut ainsi consister en une unité de consigne 20 telle que décrite précédemment en lien avec la figure 3. C'est le cas pour le contrôleur de vol 30, lorsque l'on considère ce dernier dans sa globalité, ou pour le seul contrôleur de position 31 d'un tel contrôleur de vol FC. Une telle source de consigne peut en outre consister en un dispositif de contrôle de position 31 ou d'attitude 34, voire en l'interface 33, pour les modules de contrôle de vitesse linéaire 31 et de vitesse angulaire 35.

En variante, un tel contrôleur de vol FC peut ne comporter qu'une unique unité de traitement Ut chargée de mettre en œuvre des procédés de production propres aux différents éléments électroniques (contrôleurs de position 31, d'attitude 34, de vitesse linéaire 32 ou angulaire 35, voire l'interface 33). Que l'unité de traitement Ut d'un contrôleur de vol soit centralisée ou décentralisée, c'est-à-dire que tout ou partie des différents éléments électroniques de ce dernier comporte sa propre unité de traitement Ut (la figure 4 illustre une telle situation pour les modules de contrôle 34 et 35), le comportement d'une unité de traitement Ut peut être déterminé avantageusement au moyen d'un programme d'ordinateur idoine dont les instructions de programme sont chargées dans la ou les mémoires M de données et/ou de programmes coopérant avec ladite unité de traitement.

La figure 5 illustre un mode de réalisation d'un tel système de commande 30 d'un actionneur TS conforme à l'invention pour lequel des éléments de mesures, de communication et/ou de traitement de données sont dupliqués pour des raisons de fiabilité. Selon cet exemple, trois contrôleurs de vols FC-1, FC-2 et FC-3, similaires au contrôleur FC décrit précédemment en lien avec la figure 4, sont agencés au sein dudit système de commandes 30 pour réaliser des traitements similaires à partir de données de mesure émanant d'une unité de mesure 40 et de données de consigne délivrées par une unité de consigne 20. Les trois contrôleurs de vol FC-1 à FC-3 sont ainsi chargés individuellement de produire une commande Δ1, Δ2 ou Δ3 d'un actionneur TS tel que les groupes de poussée TSa à TSd d'un aéronef 10 d'ores et déjà décrits en lien avec la figure 1. Lesdites commandes Δ1, Δ2 ou Δ3 forment ainsi collectivement la commande $\vec{\Delta}$ du système de commande 30.

Contrairement à des systèmes de commande connus présentant une redondance multiple, c'est-à-dire comportant plusieurs contrôleurs de vol produisant chacun et indépendamment les uns des autres une commande Δ1, Δ2 ou Δ3 à partir de données de mesure GS et de consignes Gsp communes, un système de commande 30 selon l'invention est agencé de sorte que lesdites commandes Δ1, Δ2 et Δ3 soient conjointement produites par les contrôleurs de vol redondants. Pour cela, lesdits trois contrôleurs de vols FC-1, FC-2 et FC-3 sont agencés pour être mutuellement en communication via un bus de communication B de sorte que chaque contrôleur de vol connaît les valeurs produites par ses pairs. Plus précisément, les dispositifs de contrôle (tels que les dispositifs 31, 32, 34 et 35 illustrés par la figure 4) composant respectivement ces derniers et assurant les régulations de position, d'attitude, de vitesses linéaire et angulaire peuvent disposer de la capacité de connaître eux-mêmes les données produites par leurs pairs au sein des différents contrôleurs de vol FC-1 à FC-3. Selon un mode de réalisation avantageux, un tel bus de communication B peut consister en un bus de données dit CAN (acronyme de l'expression anglo-saxonne « Controller Area Network »), avantageusement redondé, c'est-à-dire par exemple doublé pour des raisons de fiabilité. Un tel choix technologique est avantageux pour acheminer via un seul câble, un nombre important de données et les partager entre les différents éléments électroniques du système de commande 30.

Les sorties ou commandes Δ1, Δ2 et Δ3 délivrées respectivement par les contrôleurs de vol FC-1, FC-2 et FC-3 peuvent ainsi être également produites par ces derniers, non plus indépendamment les unes des autres, mais conjointement, c'est-à-dire en tenant compte des productions des contrôleurs de vol redondants. Lesdites commandes Δ1, Δ2 et Δ3 forment ainsi conjointement une commande $\vec{\Delta}$ à redondance multiple et sont acheminées à l'actionneur TS, plus précisément à un contrôleur électronique de ce dernier, ledit contrôleur de l'actionneur TS pouvant lui-même être éventuellement pluriel et redondé. Un tel contrôleur est englobé dans la notion d'actionneur par mesure de simplicité sur la figure 5. Un tel contrôleur et/ou actionneur TS met en œuvre une politique de choix et/ou d'arbitrage entre les différentes commandes Δ1, Δ2 et Δ3 pour effectuer son action. A titre d'exemple avantageux, un tel contrôleur peut produire une commande Δ « simple » à partir de la commande plurielle $\vec{\Delta}$ délivrée par le système de commande 30 de sorte que ladite commande Δ consiste en :

- l'une des commandes Δ1, Δ2 et Δ3 produites respectivement et conjointement par les contrôleurs de vol redondants FC-1, FC-2, FC-3 lorsque seulement deux desdits contrôleurs de vol ne conservent leurs capacités de production d'une telle commande - cette situation peut intervenir lorsque l'un desdits trois contrôleurs de vol dysfonctionne ;

- la médiane de ladite pluralité $\vec{\Delta}$ de commandes Δ1, Δ2 et Δ3 produites conjointement par les contrôleurs de vol redondants.

En variante, un tel système de commande selon l'invention peut être agencé de sorte qu'une commande Δ « simple » puisse être générée directement par le système de commande à partir de la pluralité $\vec{\Delta}$ de commandes Δ1, Δ2 et Δ3 produites respectivement et conjointement par les trois contrôleurs de vol FC-1, FC-2 et FC-3, afin de décharger l'actionneur TS d'une telle tâche d'arbitrage. Dans ce cas, un tel système de commande 30 peut comporter un moyen d'arbitrage (non représenté par mesure de simplification sur la figure 5) pour élaborer une telle commande Δ selon une technique similaire à celle exposée précédemment pour l'arbitrage que peut réaliser un actionneur.

Selon l'exemple illustré par la figure 5, l'unité de mesure 40 peut également être démultipliée sous la forme de trois unités de mesure 40-1, 40-2, 40-3 redondantes délivrant leurs mesures respectivement aux trois contrôleurs de vol FC-1, FC-2, FC-3. Ces derniers peuvent propager à ses pairs, via le bus de communication B, les données de mesures délivrées par l'unité de mesure dédiée à chaque contrôleur de vol. Ainsi, selon l'exemple illustré par la figure 5, l'unité de mesure 40-1 délivre au contrôleur de vol FC-1 des données de mesure Gs1 sous la forme d'estimations de la position $\widehat{X1}$, des vitesses linéaires $\widehat{V1}$ et angulaires $\widehat{\Omega1}$ de l'aéronef 10, de l'attitude $\widehat{\Psi1}$ et quaternion q1 de ce dernier. De la même manière, l'unité de mesure 40-2 délivre au contrôleur de vol FC-2 des données de mesure Gs2 sous la forme d'estimations de la position $\widehat{X2}$, des vitesses linéaires $\widehat{V2}$ et angulaires $\widehat{\Omega2}$ de l'aéronef 10, de l'attitude $\widehat{\Psi2}$ et quaternion $\widehat{q2}$ de ce dernier. Enfin, l'unité de mesure 40-3 délivre au contrôleur de vol FC-3 des données de mesure Gs3 sous la forme d'estimations de la position $\widehat{X3}$, des vitesses linéaires $\widehat{V3}$ et angulaires $\widehat{\Omega3}$ de l'aéronef 10, de l'attitude $\widehat{\Psi3}$ et quaternion $\widehat{q3}$ de ce dernier. En variante, les trois unités de mesures 40-1, 40-2, 40-3 pourraient être connectées via le bus de communication B aux trois contrôleurs de vol FC-1, FC-2, FC-3.

Via le bus de communication B, l'unité de consigne 20 délivre aux trois contrôleurs de vol FC-1, FC-2 et FC-3 les consignes Gsp relatives aux positions Xsp, caps et lacet $\overrightarrow{\psi sp}$. Une telle consigne peut également être plurielle $\overrightarrow{Gsp}$ lorsque ladite unité de consigne présente une redondance multiple. La figure 5 illustre également la présence éventuelle d'un module d'assistance à la navigation 20a pouvant, à titre supplétif, assister le pilote et délivrer des consignes Gsp relatives aux positions Xsp, caps et lacet $\psi sp$ en lieu et place ou en complément de l'unité de consigne 20.

Dans un monde idéal, les trois contrôleurs de vol FC-1, FC-2 et FC-3 seraient parfaitement identiques, auraient la capacité d'échantillonner les données ou signaux véhiculés par le bus de données B selon une fréquence infinie et partageraient ainsi à leurs pairs instantanément leurs données produites. Les unités de mesure délivreraient quant à elles des estimations identiques et non bruitées. Selon un tel monde idéal, il n'y aurait aucun écart ou aucune déviation possible entre les commandes Δ1, Δ2 et Δ3 délivrées à l'actionneur TS. Ce monde idéal est toutefois utopique. Il existe donc des latences entre la lecture ou l'échantillonnage réalisé par chaque contrôleur de vol, des données produites par ses pairs et la production de ses propres données. En effet, la fréquence d'échantillonnage des données disponibles via le bus de communication B ne peut être illimitée, les données de mesures sont bruitées et peuvent fluctuer selon les unités de mesure 40-1, 40-2 et 40-3 considérées et les électroniques et horloges au niveau des dispositifs de contrôles respectifs des contrôleurs de vols redondants FC-1, FC-2 et FC-3 ne peuvent être parfaitement clonées ou synchronisées. Ainsi, les commandes Δ1, Δ2 et Δ3 dévient, voire divergent, inlassablement les unes au regard des autres et perdent en précision et pertinence au détriment du pilotage de l'aéronef. Pour répondre à une telle réalité et/ou limitations technologiques, l'invention prévoit de distribuer au niveau de chaque contrôleur de vol FC-1, FC-2, FC-3 au sein du système de commande 30, voire de distribuer au niveau de chaque dispositif de contrôle 31, 32, 34, 35 de chacun desdits contrôleurs de vol FC-1, FC-2, FC-3, un procédé de correction des valeurs de grandeurs produites qui tienne compte des productions de dispositifs de contrôle et/ou contrôleurs de vol pairs. Grâce à la mise en œuvre d'un tel procédé selon l'invention, les commandes Δ1, Δ2 et Δ3 deviennent conjointement produites par les contrôleurs de vols FC-1, FC-2, FC-3 ne divergent pas en fonctionnement nominal (c'est-à-dire conformément aux contraintes de conception), laissant à l'actionneur TS une prise en compte de commandes Δ1, Δ2 et Δ3 cohérentes et précises.

Il est important de souligner que lorsque le système de commande 30 ne comporte que deux contrôleurs de vol redondants ou lorsqu'uniquement deux contrôleurs de vol parmi les trois illustrés par la figure 5 conservent leur capacité de production, il est particulièrement avantageux que les commandes redondantes demeurent cohérentes et non dirigeantes l'une ou par rapport à l'autre. En effet, même si l'actionneur TS ne tient compte que d'une seule commande sur les deux lors de son arbitrage, lorsque survient un dysfonctionnement du contrôleur de vol produisant ladite commande jusqu'alors exploitée et que ledit actionneur TS doit à présent sélectionner et exploitée la deuxième commande en lieu et place de la première devenue indisponible, l'actionneur ne subit pas une rupture marquée en termes de commande et donc de comportement. La situation serait très différente si les productions des deux contrôleurs de vols redondants étaient réalisées en parallèle, c'est-à-dire indépendamment l'une de l'autre et non conjointement accomplies comme selon l'invention. En effet, sans l'apport de l'invention, les commandes délivrées respectivement par les deux contrôleurs de vol redondants pourraient peu à peu diverger l'une de l'autre. Lors d'une bascule de commandes le comportement de l'aéronef souffrirait d'une perte de continuité. Un tel procédé de correction propre à l'invention permettant des productions conjointes de commandes redondantes peut être mis en œuvre par l'unité de traitement d'un contrôleur de vol FC selon la figure 4 en tant que tel (c'est-à-dire de manière centralisée) ou par l'une des unités de traitement des différents dispositifs de contrôle 31, 32, 34 et 35 compris dans ce dernier (c'est-à-dire de manière distribuée). L'expression « dispositif d'asservissement » sera par la suite exploitée pour désigner indifféremment un contrôleur de vol en tant que tel ou un dispositif de contrôle compris dans ce dernier.

Pour adapter le fonctionnement d'un tel dispositif d'asservissement, des instructions de programme interprétables par l'unité de traitement dudit dispositif d'asservissement pourront être chargées dans une mémoire non volatile M de celui-ci. De telles instructions de programme sont alors conçues pour que leur exécution par les unités de traitement Ut de tels dispositifs d'asservissement provoque la mise en œuvre d'un procédé de correction de la production des valeurs des grandeurs concernées conformément à l'invention. De telles instructions de programme pourront constituer un produit programme d'ordinateur en tant que tel et être véhiculées ou stockées sur tout support de mémorisation adapté.

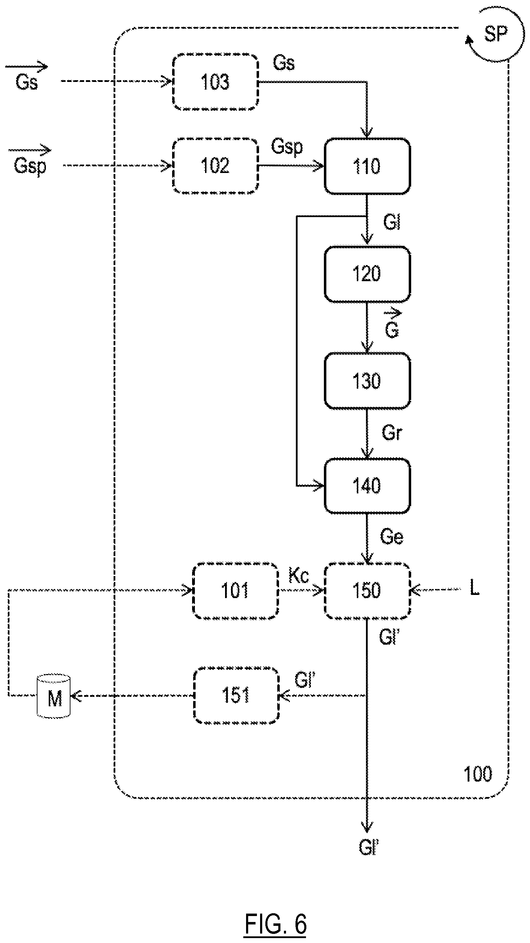

La figure 6 illustre un tel procédé 100 conforme à l'invention destiné à être mis en œuvre par l'unité de traitement Ut d'un dispositif d'asservissement parmi plusieurs dispositifs d'asservissement redondants d'un système de commande d'un actionneur. Avantageusement, un tel procédé 100 est prévu pour être mis en œuvre par chacun desdits dispositifs d'asservissement redondants. Ces derniers sont agencés pour produire respectivement des valeurs d'une même grandeur G à partir d'une même consigne Gsp et une même donnée de mesure Gs. Pour produire conjointement de telles grandeurs, lesdits dispositifs d'asservissement sont mutuellement en communication, par exemple via un bus de communication B comme illustré par la figure 5, de sorte que chaque dispositif d'asservissement connaît, c'est-à-dire peut accéder en lecture via ledit bus de communication B, aux dernières valeurs de ladite grandeur G produites par lesdits dispositifs d'asservissement redondants.

Un tel procédé 100 est mis en œuvre itérativement selon une fréquence SP donnée. Comme énoncé précédemment, sans que cela ne confère une quelconque limitation à la présente invention, une telle fréquence SP pourra être choisie pour être comprise entre cinquante et cent hertz pour un dispositif de contrôle d'un étage STA ou entre deux-cent-cinquante et mille hertz pour un dispositif de contrôle d'un étage STB d'un contrôleur FC selon la figure 4.

Un tel procédé 100 comporte une première étape de production 110 de la valeur GI d'une grandeur G à partir d'une consigne Gsp et d'une donnée de mesure Gs.

Il comporte en outre une étape 120 de lecture, par exemple, via le bus de communication B, des dernières valeurs de la grandeur produites par les dispositifs d'asservissement redondants et de construction d'un ensemble $\vec{G}$ de valeurs courantes de ladite grandeur G à partir desdites valeurs accédées en lecture et de la valeur produite à l'étape 110.

Selon un premier exemple de mise en œuvre par un système 30 de commande d'un actionneur TS selon la figure 5, ledit dispositif d'asservissement mettant en œuvre ledit procédé 100 peut consister en le contrôleur de vol FC-1, les contrôleurs de vols FC-2 et FC-3 étant les dispositifs d'asservissement pairs du contrôleur FC-1. Dans ce cas, la grandeur G évoquée est la commande d'actionneur $\vec{\Delta}$, la valeur GI de celle-ci étant alternativement la commande $\Delta 1$ lorsque ledit dispositif d'asservissement mettant en œuvre le procédé 100 est le contrôleur FC-1 ou la commande $\Delta 2$ lorsque, de son côté, le dispositif d'asservissement FC-2 met en œuvre ledit procédé 100, les contrôleurs de vol FC-1 et FC3 étant les dispositifs d'asservissement pairs de ce dernier, et ainsi de suite pour le contrôleur de vol FC-3. Selon ce premier exemple, l'ensemble $\vec{G}$ consiste en les commandes $\Delta 1$, $\Delta 2$ et $\Delta 3$. La consigne Gsp consiste quant à elle en les composantes relatives aux position Xsp, cap et lacet $\psi$sp émanant d'une unité de consigne telle que l'unité 20 selon la figure 5. La donnée de mesure Gs consiste quant à elle en l'intégralité des estimations de position $\hat{X}$, de vitesse linéaire $\hat{V}$, d'attitude $\hat{\Psi}$ et quaternion q, ainsi que de la vitesse angulaire $\hat{\Omega}$ délivrée par une unité de mesure 40 selon ladite figure 4, voire en les estimations délivrées respectivement par les unités de mesure redondantes 40-1, 40-2 et 40-3 selon l'exemple illustré par la figure 5.

Selon un deuxième exemple de mise en œuvre d'un procédé 100 selon l'invention mis en œuvre par un système 30 de commande d'actionneur TS selon la figure 5, les dispositifs d'asservissement redondants mettant en œuvre ledit procédé 100 peuvent être les contrôleurs de vitesse linéaire 32 respectifs des contrôleur de vol FC-1 et FC-2 et FC-3, voire encore les contrôleurs de vitesse angulaire 35 respectifs desdits contrôleurs de vol FC-1 et FC-2 et FC-3 (lorsque ces derniers sont constitués à l'instar du contrôleur de vol FC illustré par la figure 4). Dans le cas où lesdits dispositifs d'asservissement redondants sont les contrôleurs de vitesse linéaire 32, la grandeur G est une accélération de consigne Asp, voire plus précisément la composante de cette dernière reflétant l'action intégrale lorsque ledit contrôleur de vitesse 32 comporte un régulateur PID. La consigne Gsp consiste quant à elle en la vitesse linéaire Vsp de consigne, elle-même produite par un contrôleur de position dudit contrôleur de vol FC-1, FC-2 ou FC-3 concerné. L'ensemble des valeurs $\vec{G}$ consiste en les accélérations de consigne Asp produites par les dispositifs de contrôle de vitesse 32 pairs ou par les seules composantes de ladite accélération de consigne Asp reflétant l'action intégrale des régulateurs PID des contrôleurs de vitesse pairs.

En variante ou en complément, lesdits dispositifs d'asservissement redondants mettant en œuvre un procédé 100 conforme à l'invention peuvent consister en les dispositifs de contrôle de position 31 respectifs des contrôleurs de vol FC-1, FC-2 et FC-3. La grandeur G considérée est alors la vitesse linéaire de consigne Vsp. La consigne Gsp consiste quant à elle en les composantes relatives aux position Xsp, cap et lacet ψsp émanant d'une unité de consigne 20, la donnée de mesure Gs étant la position de l'aéronef estimée par une unité de mesure 40, 40-1, 40-2, 40-3.

Pour coupler, c'est-à-dire produire de manière conjointe la valeur d'une grandeur au regard des dispositifs d'asservissement redondants, il est nécessaire de corriger la valeur produite à l'étape 110 pour tenir compte des productions desdits dispositifs d'asservissement redondants ou pairs. Pour cela, un procédé 100 selon l'invention comporte en outre une étape 130 de détermination d'une valeur de référence Gr de ladite grandeur tirée de l'ensemble $\vec{G}$, c'est-à-dire sélectionnée parmi les valeurs formant ledit ensemble $\vec{G}$ à l'étape 120.

Lorsque le système de commande 30 d'actionneur, dont les éléments mettent en œuvre de manière distribuée chacun ledit procédé 100, comporte au moins trois dispositifs d'asservissement redondants (tels que les contrôleurs FC-1, FC-2, FC-3 ou les contrôleurs de position, d'attitude et/ou de vitesse linéaire ou angulaire de ces derniers) en capacité de produire et de communiquer une valeur de la grandeur G, l'invention prévoit que l'étape 130 de détermination de la valeur de référence Gr puisse consister à déterminer la médiane desdites valeurs formant l'ensemble $\vec{G}$ des valeurs courantes de la grandeur G. On entend par « médiane » le point milieu d'un jeu de données, en l'espèce l'ensemble G, de sorte que cinquante pour cent desdites données ont une valeur inférieure ou égale à la médiane et cinquante pour cent desdites données ont une valeur supérieure ou égale à ladite médiane. Dans un jeu de données de petite taille, il suffit de compter le nombre de données et de les ordonner selon leurs valeurs respectives par ordre croissant. Si le nombre de données est un nombre impair, il faut d'incrémenter d'une unité ledit nombre, puis le diviser par deux pour obtenir le rang qui désigne la valeur médiane. Le rang est la position d'une valeur une fois l'ensemble $\vec{G}$ ordonné : la plus petite valeur correspond au premier rang, la deuxième plus petite valeur au deuxième rang, etc. Selon l'exemple d'un système à triple redondance, la médiane sera donc choisie comme la valeur de la grandeur de deuxième rang ou encore la valeur intermédiaire entre les deux valeurs minimale et maximale. Opter pour la médiane permet d'éviter des aberrations engendrées selon certaines techniques antérieures qui privilégient la moyenne ou une sélection unitaire, lorsqu'une production de l'un des dispositifs d'asservissement dévie franchement au regard des autres.

En revanche, lorsque le système de commande 30 ne comporte que deux dispositifs d'asservissement redondants, voire lorsque seuls deux dispositifs d'asservissement parmi une pluralité demeurent en capacité de produire une valeur de la grandeur G, l'étape 130 de détermination de la valeur de référence Gr consiste à choisir, au sein de l'ensemble $\vec{G}$ de valeurs courantes de la grandeur G, l'une des valeurs courantes de ladite grandeur produite par le premier ou le deuxième dispositif d'asservissement demeurant en capacité de produire une valeur de la grandeur G. Un tel choix peut se porter sur le dispositif d'asservissement dont l'indice est le plus faible, lorsque lesdits dispositifs d'asservissement redondants sont identifiés par un tel indice ou bien selon toute autre technique optant pour une alternance ou un choix aléatoire.

Un procédé 100 comporte dès lors une étape 140 de calcul d'un écart Ge entre la valeur courante GI de la grandeur G produite à l'étape 110 et ladite valeur de référence Gr puis une étape 150 de production d'une valeur courante corrigée GI' de la grandeur G consistant en la mise en œuvre d'une opération de soustraction d'un correctif Gc. La valeur de dernier consiste en un calcul selon lequel ledit écart Ge est multiplié par un coefficient de correction Kc de ladite valeur courante GI découlant de l'étape 110. De cette manière, la production finale GI' de chacun des dispositifs d'asservissement redondants est couplée à celles des autres dispositifs d'asservissement redondants. Ces derniers produisent bien de manière conjointe des valeurs GI' corrigées de la grandeur G.

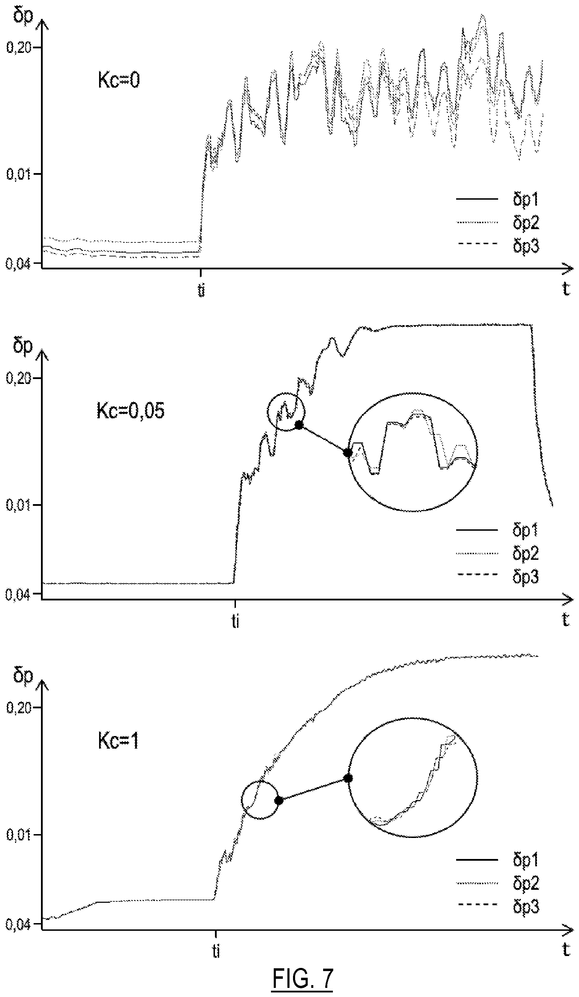

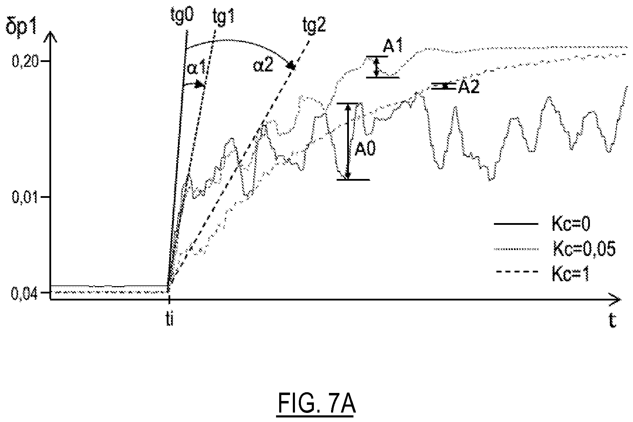

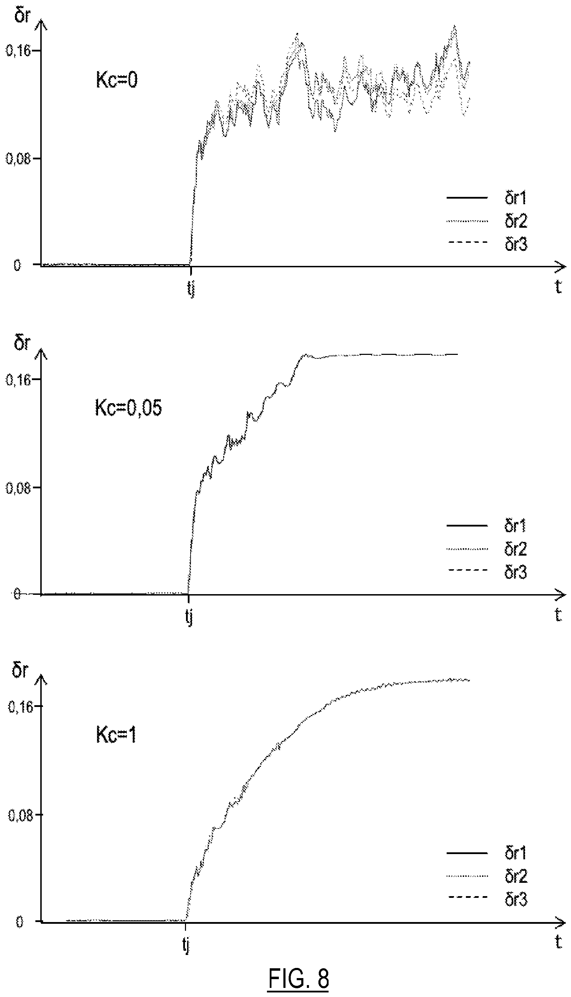

Pour mettre en œuvre une étape 150 de production d'une valeur courante corrigée GI' de la grandeur G, la valeur du coefficient de correction Kc qui induit un couplage des productions respectives des dispositifs d'asservissement redondants, peut être prédéterminée et par exemple inscrite dans une mémoire M de chaque dispositif d'asservissement. Le choix de ladite valeur du coefficient de correction Kc induit différents effets techniques remarquables sur le comportement recherché pour le système de commande 30 comme nous le verrons ultérieurement en lien avec les figures 7, 7A et 8. Selon la grandeur G considérée, ladite valeur du coefficient de correction Kc pourra être choisie comme égale à un, signifiant que l'intégralité de l'écart Ge entre la valeur courante GI de la grandeur G produite par l'un des dispositifs d'asservissement redondants et la valeur de référence Gr, est retranchée à ladite valeur courante GI, celle-ci prenant pour valeur, ladite valeur de référence Gr. En variante, seule une fraction dudit écart Ge peut être retranchée à ladite valeur courante GI pour produire la valeur corrigée GI'. Ainsi, ladite valeur de coefficient de correction Kc peut être choisie, de manière empirique, par exemple selon un critère basé sur la variabilité de la grandeur G au regard de la fréquence SP pour échantillonner, à l'étape 120, les valeurs produites par le ou les dispositifs d'asservissement pairs, c'est-à-dire pour constituer l'ensemble $\vec{G}$ des valeurs courantes de la grandeur G produites par l'ensemble des dispositifs d'asservissement redondants. On privilégiera par exemple un coefficient de correction Kc de faible valeur, par exemple de l'ordre de cinq pour cent, pour une grandeur G dont les valeurs varient intensément au regard de la fréquence SP et inversement un coefficient proche ou égal à cent pour cent dans le cas contraire. On pourra également choisir un faible coefficient de correction Kc en présence d'une grande latence entre les valeurs courantes produites par les différents dispositifs d'asservissements redondants pour constituer les ensembles $\vec{G}$ et une valeur proche ou égale à cent pour cent dans le cas contraire. On peut ainsi privilégier une valeur de Kc comprise, par exemple, entre quatre-vingts et cent pour cent lorsque que la grandeur G concernée est la composante reflétant l'action intégrale d'un régulateur PID d'un contrôle de vitesse linéaire 32. En variante ou complément, on peut privilégier une valeur de Kc comprise entre cinq et trente pour cent lorsque que la grandeur G concernée est la composante reflétant l'action intégrale d'un régulateur PID d'un contrôle de vitesse angulaire 35 par exemple. L'invention ne serait être limitée à ces seuls exemples de paramétrage. Une mémoire M d'un dispositif d'asservissement peut ainsi comporter une table de valeurs possibles pour ledit coefficient de correction Kc selon la grandeur G concernée, selon les performances des moyens de communication B pour échanger les productions respectives des dispositifs d'asservissement redondants, ou encore les fréquences d'itération respectives SP de chacun de ces derniers.

La détermination d'une valeur du correction Kc peut être prédéterminée en phase de conception ou de réglage du système de commande ou en phase de simulation d'un tel système 30 pour régler l'effet technique de couplage recherché par la mise en œuvre du procédé 100 selon la ou les grandeurs G considérées.

En variante, les valeurs dudit coefficient de correction Kc peuvent être dynamiques et ajustées en temps réel par chaque dispositif d'asservissement redondant du système de commande. Dans ce cas, l'invention prévoit qu'un tel dispositif d'asservissement puisse constituer, en une étape 151, un historique d'un nombre déterminé de valeurs des grandeurs produites GI à l'étape 110 ou corrigées GI' à l'étape 150 afin d'en estimer sa variabilité. Ainsi, en une étape 101, préalable à la mise en œuvre de l'étape 150, voire selon une fréquence d'exécution inférieure à la fréquence d'itération SP des étapes 110, 120, 130, 140 et 150, la valeur dudit coefficient de correction Kc peut être ajustée dynamiquement en fonction de l'estimation de la variation des précédentes valeurs de la grandeur G et de la fréquence d'itération SP de l'étape 120 de constitution de l'ensemble G. Un tel ajustement 101 peut être déterminé au moyen de règles de calcul préétablies. Selon une variante de réalisation, un tel ajustement 101 peut être mis en œuvre par un réseau neuronal préalablement entraîné à l'aide de données collectées via de nombreuses simulations de vol par exemple, ou plus généralement d'asservissement de différentes grandeurs.

L'invention prévoit, en variante ou en complément de la pondération de la valeur du correctif Gc par le choix d'un coefficient de correction Kc idoine au regard de telle ou telle grandeur G concernée, de limiter en valeur absolue la valeur dudit correctif Gc avant de retrancher celui-ci à la valeur GI produite à l'étape 110. Pour cela, l'étape de production 150 de la valeur du correctif Gc peut être agencée pour limiter cette dernière en valeur absolue à une valeur limite L. Ainsi, lorsque la valeur du correctif Gc calculée à partir de l'écart Ge entre la valeur courante GI de la grandeur G et la valeur de référence Gr excède en valeur absolue ladite valeur limite L, la valeur absolue dudit correctif Gc prend pour valeur ladite valeur limite L. A titre d'exemple non limitatif, une telle valeur L peut être calculée comme un pourcentage de la grandeur de référence Gr strictement supérieur à zéro et inférieur à trente pour cent.

Ce double paramétrage de l'étape 150, d'une part, par la valeur du coefficient de correction Kc et, d'autre part, par la valeur limite L, offre une très grande finesse pour régler le comportement attendu par un système de commande 30 d'actionneur TS conforme à l'invention.

Comme l'indique la figure 5, certaines données d'entrées d'un dispositif d'asservissement peuvent être redondées, c'est-à-dire émanant d'une pluralité de sources. Cela peut être le cas, lorsque des données de mesures sont délivrées audit dispositif d'asservissement par une pluralité de sources redondantes ou bien lorsque, via le but de communication B, il est prévu d'injecter volontairement en entrée dudit dispositif d'asservissement, des valeurs produites par des dispositifs d'asservissement tiers également redondés. Par exemple, en lien avec les figures 4 et 5, il peut être prévu d'injecter en entrée d'un dispositif d'asservissement en vitesse linéaire 32 d'une part les estimations de la vitesse linaire de l'aéronef délivrées par les unités de mesure 40-1, 40-2, 40-3 et, d'autre part, les vitesses linéaires de consignes délivrées respectivement par les dispositifs de contrôle de position 31 des différents contrôleurs de vol FC-1, FC-2, FC-3.

Il pourrait en être de même pour les contrôleurs de position 31, d'attitude 34 ou de vitesse angulaire 35 respectifs des contrôleurs de vol redondants FC-1, FC-2 et FC-3.

Ainsi, en lien avec la figure 6, lorsqu'une consigne Gsp consiste en une pluralité de valeurs $\overrightarrow{Gsp}$ délivrées respectivement par des sources redondantes délivrant ladite consigne du système de commande d'actionneur, un procédé 100 conforme à l'invention peut comporter une étape 102 pour produire ladite consigne Gsp de sorte que celle-ci prenne pour valeur :

- l'une des valeurs de ladite pluralité lorsque cette dernière $\overrightarrow{Gsp}$ ne comprend que deux valeurs, c'est-à-dire lorsque seules deux sources redondantes délivrent une telle consigne ;

- la médiane de ladite pluralité de valeurs lorsque cette dernière $\overrightarrow{Gsp}$ comprend au moins trois valeurs, c'est-à-dire lorsqu'au moins trois sources redondantes délivrent une telle consigne.

De la même manière, lorsque l'étape de production 110 de la valeur GI d'une grandeur G est mise en œuvre à partir d'une consigne Gsp et d'une donnée de mesure Gs consistant en une pluralité de valeurs $\overrightarrow{Gs}$ délivrées respectivement par des sources redondantes dudit système de commande (par exemple, les unités de mesure 40-1, 40-2, 40-3 selon la figure 5), un procédé 100 selon l'invention peut avantageusement comporter une étape 103 pour produire ladite donnée de mesure Gs de sorte que celle-ci prenne pour valeur :

- l'une des valeurs de ladite pluralité de valeurs $\overrightarrow{Gs}$ lorsque cette dernière $\overrightarrow{Gs}$ ne comprend que deux valeurs, c'est-à-dire lorsque seules deux sources redondantes délivrent une donnée de mesure ;

- la médiane de ladite pluralité de valeurs lorsque cette dernière $\overrightarrow{Gs}$ comprend au moins trois valeurs, c'est-à-dire lorsqu'au moins trois sources redondantes délivrent une telle donnée de mesure.

En lien avec les figures 4 et 5, les figures 7, 7A et 8 permettent d'illustrer les différents apports que procure la mise en œuvre de l'invention et l'impact du choix de la valeur du coefficient de correction Kc sur le comportement d'un système de commande conforme à l'invention. Les deux figures 7 et 8 illustrent respectivement deux grandeurs G en l'espèce les composantes relatives au tangage δp, au roulis δr de la commande $\overrightarrow{\Delta}$, et plus particulièrement, les composantes de ces grandeurs reflétant l'action intégrale d'un régulateur PID d'un contrôleur de vitesse angulaire 35 selon la figure 4.

La figure 7 décrit plus précisément les composantes reflétant l'action intégrale de la composante de la commande $\overrightarrow{\Delta}$ relative au tangage δp respectivement produites par les contrôleurs de vol FC-1, FC-2 et FC-3. Ainsi, les productions respectives en lien avec le tangage δp desdits contrôleurs de vol apparaissent :

- en courbes de trait plein pour le contrôleur FC-1 (composante δp1) ;

- en courbes pointillé pour le contrôleur FC-2 (composante δp2) ;

- en courbes de trait discontinu pour le contrôleur FC-3 (composante δp3).

Ladite figure 7 illustre les productions respectives au cours du temps t desdits contrôleurs de vol FC-1, FC-2 et FC-3 selon trois valeurs distinctes du coefficient de correction Kc, respectivement égales à zéro, cinq centièmes et un via trois graphiques distincts. Le graphique supérieur correspond à une valeur nulle (Kc=0) du coefficient de correction Kc, soit une situation conforme à l'état de l'art (aucune correction des productions respectives des contrôleurs de vol FC-1, FC-2 et FC-3 n'est mise en œuvre). Le graphique central correspond à une valeur du coefficient de correction Kc égale à cinq centièmes (Kc=0,05), soit un couplage partiel des productions respectives des contrôleurs de vol FC-1, FC-2 et FC-3. Enfin, le graphique inférieur correspond à une valeur du coefficient de correction Kc égale un (Kc=1), soit un couplage total des productions respectives desdits contrôleurs de vol FC-1, FC-2 et FC-3.

Nous pouvons constater que, lorsque la valeur du coefficient de correction Kc est nulle (situation illustrée par le graphique supérieur de la figure 7), les dispositifs d'asservissement, en l'espèce les régulateurs PID des contrôleurs de vitesse angulaire 35 des contrôleurs de vols FC-1, FC-2 et FC-3, ne sont pas couplés. Les trois courbes δp1, δp2 et δp3 décrivant leurs productions respectives présentent une divergence croissante et des oscillations très marquées. En revanche, la mise en œuvre de l'invention induit un effet technique remarquable de convergence et de cohérence des productions respectives desdits contrôleurs de vol FC-1, FC-2 et FC-3, comme en témoignent les graphiques central et inférieur en figure 7 présentant les trois courbes δp1, δp2 et δp3 quasiment superposables à l'œil nu traduisant un excellent couplage immédiat dès que le coefficient de correction Kc est supérieur à zéro. Une très faible valeur, cinq centièmes selon l'exemple illustré par le graphique central de la figure 7, provoque un très bon couplage symbolisé par une superposition quasi-parfaite des trois courbes δp1, δp2 et δp3 (comme l'indique l'agrandissement partiel desdites courbes). Il en est de même pour un couplage total procuré par le choix d'une valeur du coefficient de correction Kc égale à un. Les courbes δp1, δp2 et δp3 sont également parfaitement superposées, synonyme d'un très fort couplage et d'une totale cohérence, comme l'indique l'agrandissement partiel desdites courbes δp1, δp2 et δp3 . Si l'on considère plus précisément les deux graphiques central et inférieur relatifs respectivement aux valeurs cinq centièmes et un du coefficient de correction Kc, nous pouvons constater, au-delà des productions alignées, couplées des trois contrôleurs de vol FC-1, FC-2 et FC-3, que la valeur du coefficient de correction Kc égale cinq centièmes maintient une grande réactivité (la pente des courbes δp1, δp2 et δp3 est très raide ou verticale en un instant ti pour lequel le système répond à une consigne de nature à provoquer une inflexion marquante de la valeur des composantes δp1, δp2 et δp3. Une telle réactivité peu néanmoins être amoindrie par une valeur supérieure du coefficient de correction Kc (valeur égale à un, en l'espèce pour le graphique inférieur de la figure 7). La pente des courbes δp1, δp2 et δp3 est en effet moins verticale en l'instant ti. Toutefois, lesdites courbes superposées δp1, δp2 et δp3 sont plus lisses ou stables que celles représentées sur le graphique central et, a fortiori, que celles illustrées par le graphe supérieur (absence de correction). Le choix de la valeur coefficient de correction Kc permet ainsi de déterminer un compromis entre la réactivité et la stabilité recherchées. Cet impact sur la réactivité et la stabilité est illustré de manière plus précise par la figure 7A. Celle-ci superpose trois courbes décrivant les valeurs de la seule composante relative au tangage $\delta p1$ produite par le contrôleur de vol FC-1 respectivement pour trois valeurs différentes du coefficient de correction Kc :

- en courbe de trait plein pour une valeur de Kc nulle (K=0) ;

- en courbe pointillé pour une valeur de Kc égale à 5 centièmes (K=0,05) ;

- en courbe de trait discontinu pour une valeur de Kc égale à un (K=1).

Sur la figure 7A, ont été représentées les tangentes tg0, tg1 et tg2 respectives aux trois courbes de $\delta p1$ évoquées précédemment (respectivement pour Kc=0, Kc=0,05 et Kc=1) à l'instant ti où le système répond à une consigne de nature à provoquer une inflexion marquante de la valeur de ladite composante $\delta p1$. La tangente tg0, quasi verticale et illustrée en trait plein, illustre la très grande réactivité du système de commande en l'absence de couplage (Kc=0) avec les productions respectives des contrôleurs de vol FC-2 et FC-3 redondants. La tangente tg1, illustrée en pointillé, témoigne toujours d'une très grande réactivité du système de commande lors d'un faible couplage (Kc=0,05). En effet, un angle $\alpha 1$, déterminé par les tangentes tg0 et tg1, de faible valeur traduit une légère baisse de réactivité. La tangente tg2, illustrée en trait discontinu, illustre la réactivité du système de commande lors d'un fort couplage (Kc=1). L'angle $\alpha 2$ déterminé par les tangentes tg0 et tg2 est très supérieur à l'angle $\alpha 1$ témoignant d'une réactivité plus faible.

Ladite figure 7A illustre toutefois l'apport en stabilité en contrepartie d'une réactivité éventuellement amoindrie. Ainsi, l'amplitude moyenne des variations de ladite composante $\delta p1$ est très importante (celle-ci étant illustrée par le segment A0 sur la figure 7) synonyme d'instabilité, alors que, dès que l'invention procure un couplage entre les productions respectives des contrôleurs de vol redondants, même si celui-ci est minime (valeur du coefficient de correction Kc=0,05), une telle amplitude moyenne représentée par le segment A1 devient très faible, voire même quasi nulle comme l'indique le segment A2 illustrant ladite amplitude moyenne pour un fort couplage (Kc=1).

Nous pouvons constater en observant la figure 8, des apports remarquables et similaires procuré par l'invention, lorsque celle-ci est mise en œuvre pour coupler d'autres productions respectives des trois contrôleurs de vol FC-1, FC-2 et FC-3, en l'espèce la composante reflétant d'action intégrale du régulateur PID du contrôleur de vitesse angulaire 35 en lien avec la composante de commande $\vec{\Delta}$ relative au roulis $\delta r$.

En effet, ladite figure 8 décrit les productions relatives aux commandes tangage $\delta r$ respectivement produites par les contrôleurs de vol FC-1, FC-2 et FC-3. Celles-ci apparaissent :

- en courbes de trait plein pour le contrôleur FC-1 (composante $\delta r1$) ;

- en courbes en pointillé pour le contrôleur FC-2 (composante $\delta r2$) ;

- en courbes de trait discontinu pour le contrôleur FC-3 (composante $\delta r3$).

A l'instar de la figure 7, ladite figure 8 illustre les productions respectives desdits contrôleurs de vol FC-1, FC-2 et FC-3, au cours du temps t, selon trois valeurs distinctes du coefficient de correction Kc respectivement égales à zéro, cinq centièmes et un au moyen de trois graphiques distincts présents respectivement dans les parties supérieure, centrale et inférieure de ladite figure 8. Le graphique supérieur correspond à une valeur nulle du coefficient de correction Kc, soit une situation conforme à l'état de l'art (aucune correction des productions respectives des contrôleurs de vol FC-1, FC-2 et FC-3 n'est mise en œuvre). Le graphique central correspond à une valeur du coefficient de correction Kc égale cinq centièmes, soit un couplage partiel des productions respectives des contrôleurs de vol FC-1, FC-2 et FC-3. Enfin, le graphique inférieur correspond à une valeur du coefficient de correction Kc égale à un, soit un couplage total des productions respectives desdits contrôleurs de vol FC-1, FC-2 et FC-3.

Nous pouvons constater que lorsque la valeur du coefficient de correction Kc est nulle (situation illustrée par le graphique supérieur de la figure 8), les dispositifs d'asservissement, en l'espèce les régulateurs PID des contrôleurs de vitesse angulaire 35 des contrôleurs de vols FC-1, FC-2 et FC-3, ne sont pas couplés. Les trois courbes $\delta r1$, $\delta r2$ et $\delta r3$ décrivant leurs productions respectives présentent une divergence croissante et des oscillations très marquées. En revanche, la mise en œuvre de l'invention montre un couplage immédiat dès que le coefficient de correction Kc est supérieur à zéro. Une très faible valeur, cinq centièmes selon l'exemple illustré par le graphique central de la figure 8, provoque une superposition quasi parfaite des trois courbes $\delta r1$, $\delta r2$ et $\delta r3$. Il en est de même pour un couplage total procuré par le choix d'une valeur du coefficient de correction Kc égale à un. Les courbes $\delta r1$, $\delta r2$ et $\delta r3$ sont parfaitement superposées, synonyme d'un très fort couplage et d'une grande cohésion. Si l'on considère plus précisément les deux graphiques central et inférieur relatifs respectivement aux valeur cinq centièmes et un du coefficient de correction Kc, nous pouvons constater, au-delà des productions cohérentes des trois contrôleurs de vol FC-1, FC-2 et FC-3, que la valeur du coefficient de correction Kc égale à cinq centièmes maintient une grande réactivité. En effet, la pente des courbes $\delta r1$, $\delta r2$ et $\delta r3$ est très raide ou verticale en un instant tj pour lequel le système répond à une consigne de nature à provoquer une inflexion marquante de la valeur desdites composantes $\delta r1$, $\delta r2$ et $\delta r3$. Une telle pente est toutefois moins verticale, si l'on considère les valeurs desdites composantes $\delta r1$, $\delta r2$ et $\delta r3$ induites par une valeur supérieure du coefficient de correction Kc (valeur égale à un, en l'espèce pour le graphique inférieur de la figure 8). En revanche, lesdites courbes superposées sont plus lisses ou stables que celles représentées sur le graphique central. Cette figure 8 confirme que le choix de la valeur coefficient de correction Kc permet ainsi de déterminer le compromis entre la réactivité et la stabilité recherchées du système.

L'invention a été décrite au travers de différentes configurations d'un système de commande d'actionneurs, plus précisément de groupes de poussée d'un aéronef. L'invention ne saurait être limitée à ce seul exemple de système de commande d'actionneurs. Elle concerne plus généralement, tout système de commande comportant un ou plusieurs dispositifs d'asservissement à redondance multiple appliqué à la domotique, à l'industrie, aux véhicules terrestres, maritimes aériens ou spatiaux, que lesdits actionneurs permettent de mouvoir ces derniers ou de réguler la température, l'atmosphère ou encore la luminosité régnant au sein de ces derniers.

**Revendications**

1. Procédé (100) mis en œuvre par une unité de traitement d'un dispositif d'asservissement parmi plusieurs dispositifs d'asservissement redondants (FC-1, FC-2, FC-3) d'un système (30) de commande d'un actionneur (TS), chaque dispositif d'asservissement redondant produisant des valeurs d'une même grandeur (G) à partir d'une même consigne (Gsp) et d'une même donnée de mesure (Gs), lesdites valeurs produites étant exploitées par ledit système (30) pour commander l'actionneur (TS), lesdits dispositifs d'asservissement redondants (FC-1, FC-2, FC-3) étant en outre mutuellement en communication de sorte que chaque dispositif d'asservissement redondant accède en lecture aux dernières valeurs produites de ladite grandeur (G) par lesdits dispositifs d'asservissement redondants, ledit procédé comportant itérativement (SP) :

   - une étape de production (110) de la valeur courante (GI) de grandeur (G) à partir de la consigne (Gsp) et de la donnée de mesure (Gs) ;
   - une étape (120) de lecture des dernières valeurs de la grandeur (G) produites par les dispositifs d'asservissement redondants et de constitution d'un ensemble (G) de valeurs courantes de ladite grandeur (G) ;
   - une étape (130) de détermination d'une valeur de référence (Gr) de ladite grandeur (G) tirée dudit ensemble ($\vec{G}$) ;
   - une étape (140) de calcul d'un écart (Ge) entre la valeur courante (GI) de la grandeur (G) produite et ladite valeur de référence (Gr) ;
   - une étape (150) de correction de la valeur courante (GI) et de production d'une valeur courante corrigée (GI') de la grandeur (G) consistant à retrancher à ladite valeur courante (GI) un correctif (Gc) résultant d'un calcul selon lequel ledit écart (Ge) est multiplié par un coefficient de correction (Kc) supérieur à zéro de ladite valeur courante (GI).

2. Procédé (100) selon la revendication précédente, pour lequel :

   - le système comporte au moins trois dispositifs d'asservissement redondants en capacité de produire une valeur de la grandeur (G) ;
   - l'étape (130) de détermination de la valeur de référence (Gr) consiste à choisir la médiane des valeurs de l'ensemble ($\vec{G}$) des valeurs courantes de la grandeur (G).

3. Procédé (100) selon la revendication 1, pour lequel :

   - le système ne comporte que deux dispositifs d'asservissement redondants en capacité de produire une valeur de la grandeur (G) ;
   - l'étape (130) de détermination de la valeur de référence (Gr) consiste à choisir l'une des valeurs de l'ensemble (G) des valeurs courantes de la grandeur (G).

4. Procédé (100) selon l'une quelconque des revendications précédentes, pour lequel la valeur du coefficient de correction (Kc) est prédéterminée.

5. Procédé (100) selon l'une quelconque des revendications 1 à 3, comportant une étape (151) d'enregistrement de la valeur courante (GI) ou corrigée (GI') de la grandeur (G) dans une mémoire de données (M) du premier dispositif d'asservissement pour constituer un historique d'un nombre déterminé de valeurs et, préalablement à l'étape de correction (150), une étape (101) de production de la valeur du coefficient de correction (Kc) qui est en fonction de la variabilité des valeurs tirées dudit historique et de la fréquence d'itération (SP) de l'étape (120) de lecture des dernières valeurs de la grandeur (G) produites par les dispositifs d'asservissement redondants.

6. Procédé (100) selon l'une quelconque des revendications précédentes pour lequel le calcul de la valeur du correctif (Gc) est agencé pour que ladite valeur du correctif (Gc) n'excède pas en valeur absolue une valeur limite (L) prédéterminée.

**7.** Procédé (100) selon l'une quelconque des revendications précédentes pour lequel les dispositifs d'asservissement redondants comportent chacun un correcteur PID délivrant trois composantes d'un signal de sortie décrivant respectivement une action proportionnelle, une action intégrale et une action dérivée et, pour lequel, la grandeur (G) consiste en la composante décrivant ladite action intégrale dudit correcteur PID.

**8.** Procédé (100) selon l'une quelconque des revendications précédentes, lorsque le système de commande (30) comporte des sources redondantes agencées pour délivrer conjointement une pluralité de valeurs de consignes ($\overrightarrow{Gsp}$), comportant une étape (102) pour produire ladite consigne (Gsp) de sorte que cette dernière prenne pour valeur :

- l'une des valeurs de ladite pluralité de valeurs ($\overrightarrow{Gsp}$) lorsque le système de commande (30) ne comporte que deux sources redondantes ;
- la médiane de ladite pluralité de valeurs ($\overrightarrow{Gsp}$) ledit système de commande comprend au moins trois sources redondantes.

**9.** Procédé (100) selon l'une quelconque des revendications précédentes, lorsque le système de commande (30) comporte des sources redondantes agencées pour délivrer conjointement une pluralité de valeurs de la donnée de mesure (Gs), comportant une étape (103) pour produire ladite donnée de mesure (Gs) de sorte que cette dernière (Gs) prenne pour valeur :

- l'une des valeurs de ladite pluralité de valeurs (Gs) lorsque le système de commande ne comporte que deux sources redondantes ;
- la médiane de ladite pluralité de valeurs (Gs) lorsque le système de commande comporte au moins trois sources redondantes.

**10.** Dispositif d'asservissement d'un système de commande (30) d'un actionneur (TS), ledit système (30) comportant une pluralité de dispositifs d'asservissement redondants (FC-1, FC-2, FC-3) produisant chacun une valeur (Δ1, Δ2, Δ3) d'une même grandeur à partir d'une même consigne (Gsp, $\overrightarrow{Gsp}$) et d'une même donnée de mesure (Gs1, Gs2, Gs3), lesdits dispositifs d'asservissement redondants (FC-1, FC-2, FC-3) étant mutuellement en communication (B) de sorte que chaque dispositif d'asservissement accède en lecture aux dernières valeurs (Δ1, Δ2, Δ3) de ladite grandeur produites par les dispositifs d'asservissement redondants, ledit dispositif d'asservissement (FC-1, FC-2, FC-3) étant agencé pour mettre en œuvre un procédé (100) selon l'une quelconque des revendications précédentes.

**11.** Système de commande (30) d'un actionneur (TS) comportant une pluralité de dispositifs d'asservissement redondants (FC-1, FC-2, FC-3) conformes à la revendication précédente, ladite commande ($\overrightarrow{\Delta}$, Δ) étant produite à partir de la pluralité de valeurs produites (Δ1, Δ2, Δ3) de la grandeur conjointement par les dispositifs d'asservissement redondants.

**12.** Système (30) selon la revendication précédente, pour lequel ladite commande (Δ) est produite à partir de :

- l'une des valeurs de ladite pluralité de valeurs produites ($\overrightarrow{\Delta}$, Δ1, Δ2, Δ3) de la grandeur par les dispositifs d'asservissement redondants lorsque ladite pluralité de valeurs ($\overrightarrow{\Delta}$, Δ1, Δ2, Δ3) ne comprend que deux valeurs ;
- la médiane de ladite pluralité de valeurs produites ($\overrightarrow{\Delta}$, Δ1, Δ2, Δ3) de la grandeur par les dispositifs d'asservissement redondants lorsque ladite pluralité de valeurs ($\overrightarrow{\Delta}$, Δ1, Δ2, Δ3) comprend au moins trois valeurs.

**13.** Véhicule (10) d'une charge constituée d'un pilote, d'un passager et/ou de biens ou de marchandises comportant un ou plusieurs actionneurs sous la forme d'au moins un groupe de poussée (TSa, TSb, TSc, TSd) pour mouvoir ledit véhicule (10) dont une commande ($\overrightarrow{\Delta}$, Δ) est produite par un système de commande (30) selon la revendication précédente.

**14.** Véhicule (10) selon la revendication précédente consistant en un aéronef (10).

**15.** Produit programme d'ordinateur comportant une ou plusieurs instructions de programme interprétables par une unité de traitement (Ut) d'un dispositif d'asservissement parmi une pluralité de dispositifs d'asservissement redondants (FC-1, FC-2, FC-3) d'un système de commande (30) d'un actionneur (TS), lesdites instructions de programme étant chargeables dans une mémoire non volatile (M) du dispositif d'asservissement et conçues de sorte que l'exécution desdites instructions par ladite unité de traitement (Ut) provoque la mise en œuvre d'un procédé (100) selon l'une quelconque des revendications 1 à 9.

**16.** Support de mémorisation lisible par un ordinateur comportant les instructions d'un produit programme d'ordinateur selon la revendication précédente.

**Patentansprüche**

**1.** Verfahren (100), durchgeführt von einer Verarbeitungseinheit eines Servogeräts unter mehreren redundanten Servogeräten (FC-1, FC-2, FC-3) eines Systems (30) zur Steuerung eines Aktuators (TS), wobei jedes redundante Servogerät Werte einer gleichen Größe (G) auf der Basis eines gleichen Sollwerts (Gsp) und eines gleichen Messdatenelements (Gs) erzeugt, wobei die genannten erzeugten Werte von dem genannten System (30) zum Steuern des Aktuators (TS) ausgewertet werden, wobei die genannten redundanten Servogeräte (FC-1, FC-2, FC-3) außerdem miteinander in Kommunikation stehen, so dass jedes redundante Servogerät lesend auf die letzten durch die genannten redundanten Servogeräte erzeugten Werte der genannten Größe (G) zugreift, wobei das genannte Verfahren iterativ Folgendes beinhaltet (SP):

- einen Schritt (110) des Erzeugens des aktuellen Werts (GI) der Größe (G) auf der Basis des Sollwerts (Gsp) und des Messdatenelements (Gs);
- einen Schritt (120) des Lesens der letzten durch die redundanten Servogeräte erzeugten Werte der Größe (G) und des Bildens eines Satzes ($\vec{G}$) von aktuellen Werten der genannten Größe (G);
- einen Schritt (130) des Bestimmens eines Referenzwerts (Gr) der genannten Größe (G), der aus dem genannten Satz ($\vec{G}$) entnommen wird;
- einen Schritt (140) des Berechnens einer Abweichung (Ge) zwischen dem aktuellen Wert (GI) der erzeugten Größe (G) und dem genannten Referenzwert (Gr);
- einen Schritt (150) des Korrigierens des aktuellen Werts (GI) und des Erzeugens eines korrigierten aktuellen Werts (GI') der Größe (G), der darin besteht, von dem genannten aktuellen Wert (GI) einen Korrekturwert (Gc) abzuziehen, der sich aus einer Berechnung ergibt, gemäß der die genannte Abweichung (Ge) mit einem Korrekturkoeffizienten (Kc) größer als Null des genannten aktuellen Werts (GI) multipliziert wird.

2. Verfahren (100) nach dem vorherigen Anspruch, wobei:

- das System mindestens drei redundante Servogeräte mit der Fähigkeit umfasst, einen Wert der Größe (G) zu erzeugen;
- der Schritt (130) des Bestimmens des Referenzwerts (Gr) darin besteht, den Median der Werte des Satzes ($\vec{G}$) der aktuellen Werte der Größe (G) auszuwählen.

3. Verfahren (100) nach Anspruch 1, wobei:

- das System nur zwei redundante Servogeräte mit der Fähigkeit umfasst, einen Wert der Größe (G) zu erzeugen;
- der Schritt (130) des Bestimmens des Referenzwerts (Gr) darin besteht, einen der Werte aus dem Satz ($\vec{G}$) der aktuellen Werte der Größe (G) auszuwählen.

4. Verfahren (100) nach einem der vorherigen Ansprüche, wobei der Wert des Korrekturkoeffizienten (Kc) vorbestimmt ist.

5. Verfahren (100) nach einem der Ansprüche 1 bis 3, das einen Schritt (151) des Speicherns des aktuellen (GI) oder korrigierten (GI') Werts der Größe (G) in einem Datenspeicher (M) des ersten Servogeräts zum Bilden einer Historie einer bestimmten Anzahl von Werten und vor dem Korrekturschritt (150) einen Schritt (101) des Erzeugens des Werts des Korrekturkoeffizienten (Kc) beinhaltet, der eine Funktion der Variabilität der aus der genannten Historie gezogenen Werte und der Iterationsfrequenz (SP) des Schrittes (120) des Lesens der letzten durch die redundanten Servogeräte erzeugten Werte der Größe (G) ist.

6. Verfahren (100) nach einem der vorherigen Ansprüche, wobei das Berechnen des Korrekturwerts (Gc) so ausgelegt ist, dass der genannte Korrekturwert (Gc) einen vorbestimmten Grenzwert (L) in absoluten Zahlen nicht überschreitet.

7. Verfahren (100) nach einem der vorherigen Ansprüche, wobei die redundanten Servogeräte jeweils einen PID-Korrektor umfassen, der drei Komponenten eines Ausgangssignals liefert, die jeweils eine Proportionalaktion, eine Integralaktion und eine Differentialaktion beschreiben, und wobei die Größe (G) aus der Komponente besteht, die die genannte Integralaktion des genannten PID-Korrektors beschreibt.

8. Verfahren (100) nach einem der vorherigen Ansprüche, wenn das Steuersystem (30) redundante Quellen umfasst, die zum gemeinsamen Liefern einer Mehrzahl von Sollwerten ($\overrightarrow{Gsp}$) ausgelegt sind, mit einem Schritt (102) des Erzeugens des genannten Sollwerts (Gsp), so dass dieser als Wert:

- einen der Werte aus der genannten Mehrzahl von Werten ($\overrightarrow{Gsp}$) annimmt, wenn das Steuersystem (30) nur zwei redundante Quellen umfasst;
- den Median der genannten Mehrzahl von Werten ($\overrightarrow{Gsp}$) annimmt, wenn das genannte Steuersystem mindestens drei redundante Quellen umfasst.

9. Verfahren (100) nach einem der vorherigen Ansprüche, wenn das Steuersystem (30) redundante Quellen umfasst, die zum gemeinsamen Liefern einer Mehrzahl von Werten des Messdatenelements ($\overrightarrow{Gs}$) ausgelegt sind, mit einem Schritt (103) des Erzeugens des genannten Messdatenelements (Gs), so dass dieses (Gs) als Wert:

- einen der Werte aus der genannten Mehrzahl von Werten ($\overrightarrow{Gs}$) annimmt, wenn das Steuersystem nur zwei redundante Quellen umfasst;
- den Median der genannten Mehrzahl von Werten ($\overrightarrow{Gs}$) annimmt, wenn das Steuersystem mindestens drei redundante Quellen umfasst.

10. Servogerät eines Systems (30) zum Steuern eines Aktuators (TS), wobei das genannte System (30) eine Mehrzahl von redundanten Servogeräten (FC-1, FC-2, FC-3) umfasst, die jeweils einen Wert ($\Delta1, \Delta2, \Delta3$) einer gleichen Größe auf der Basis eines gleichen Sollwerts (Gsp, $\overrightarrow{Gsp}$) und eines gleichen Messdatenelements (Gs1, Gs2, Gs3) erzeugen, wobei die genannten redundanten Servogeräte (FC-1, FC-2, FC-3) miteinander in Kommunikation stehen (B), so dass jedes Servogerät lesend auf die letzten durch die redundanten Servogeräte erzeugten Werte ($\Delta1, \Delta2, \Delta3$) der genannten Größe zugreift, wobei das genannte Servogerät (FC-1, FC-2, FC-3) zum Durchführen eines Verfahrens (100) nach einem der vorherigen Ansprüche ausgelegt ist.

11. System (30) zum Steuern eines Aktuators (TS) mit einer Mehrzahl von redundanten Servogeräten (FC-1, FC-2, FC-3) nach dem vorherigen Anspruch, wobei der genannte Steuerbefehl ($\overrightarrow{\Delta}, \Delta$) auf der Basis der Mehrzahl von gemeinsam durch die redundanten Servogeräte erzeugten Werten ($\Delta1, \Delta2, \Delta3$) der Größe erzeugt wird.

12. System (30) nach dem vorherigen Anspruch, wobei der genannte Steuerbefehl ($\Delta$) erzeugt wird auf der Basis von:

- einem der Werte aus der genannten Mehrzahl von durch die redundanten Servogeräte erzeugten Werten ($\overrightarrow{\Delta}, \Delta1, \Delta2, \Delta3$) der Größe, wenn die genannte Mehrzahl von Werten (, $\Delta1, \Delta2, \Delta3$) nur zwei Werte umfasst;
- dem Median der genannten Mehrzahl von durch die redundanten Servogeräte erzeugten Werten ($\overrightarrow{\Delta}, \Delta1, \Delta2, \Delta3$) der Größe, wenn die genannte Mehrzahl von Werten ($\overrightarrow{\Delta}, \Delta1, \Delta2, \Delta3$) mindestens drei Werte umfasst.

13. Fahrzeug (10) für eine aus einem Fahrer, einem Passagier und/oder Gütern oder Waren bestehende Ladung mit einem oder mehreren Aktuatoren in Form von mindestens einer Schubeinheit (TSa, TSb, TSc, TSd) zum Bewegen des genannten Fahrzeugs (10), für das ein Steuerbefehl ($\overrightarrow{\Delta}, \Delta$) durch ein Steuersystem (30) nach dem vorherigen Anspruch erzeugt wird.

14. Fahrzeug (10) nach dem vorherigen Anspruch, das aus einem Luftfahrzeug (10) besteht.

15. Computerprogrammprodukt, das einen oder mehrere Programmbefehle umfasst, die von einer Verarbeitungseinheit (Ut) eines Servogeräts aus einer Mehrzahl von redundanten Servogeräten (FC-1, FC-2, FC-3) eines Systems (30) zum Steuern eines Aktuators (TS) interpretierbar sind, wobei die genannten Programmbefehle in einen nichtflüchtigen Speicher (M) des Servogeräts ladbar und so ausgelegt sind, dass die Ausführung der genannten Befehle durch die genannte Verarbeitungseinheit (Ut) die Durchführung eines Verfahrens (100) nach einem der Ansprüche 1 bis 9 bewirkt.

16. Computerlesbares Speichermedium mit den Befehlen eines Computerprogrammprodukts nach dem vorherigen Anspruch.

**Claims**

1. Method (100) implemented by a processing unit of one servo device from among several redundant servo devices (FC-1, FC-2, FC-3) of a system (30) for controlling an actuator (TS), each redundant servo device generating values of one and the same variable (G) on the basis of one and the same setpoint (Gsp) and one and the same measurement data item (Gs), said generated values being used by said system (30) in order to control the actuator (TS), said redundant servo devices (FC-1, FC-2, FC-3) moreover being in communication with each other so that each redundant servo device accesses, by reading, the latest values of said variable (G) generated by said redundant servo devices, said method including iteratively (SP):

- a step (110) of generating the current value (GI) of the variable (G) on the basis of the setpoint (Gsp) and the measurement data item (Gs);
- a step (120) of reading the latest values of the variable (G) generated by the redundant servo devices and building up a set ($\overrightarrow{G}$) of current values of said variable (G);
- a step (130) of determining a reference value (Gr) of said variable (G) taken from said set ($\overrightarrow{G}$);
- a step (140) of calculating a difference (Ge) between the current value (GI) of the generated variable (G) and said reference value (Gr);
- a step (150) of correcting the current value (GI) and generating a corrected current value (GI') of the variable (G) consisting of subtracting from said current value (GI) a corrective (Gc) resulting from a calculation according to which said difference (Ge) is multiplied by a correction coefficient (Kc), greater than zero, of said current value (Gl).

2. Method (100) according to the preceding claim, in which:

   - the system includes at least three redundant servo devices capable of generating a value of the variable (G);
   - the step (130) of determining the reference value (Gr) consists of selecting the median of the values of the set ($\vec{G}$) of the current values of the variable (G).

3. Method (100) according to claim 1, in which:

   - the system includes only two redundant servo devices capable of generating a value of the variable (G);
   - the step (130) of determining the reference value (Gr) consists of selecting one of the values of the set ($\vec{G}$) of the current values of the variable (G).

4. Method (100) according to any one of the preceding claims, in which the value of the correction coefficient (Kc) is predetermined.

5. Method (100) according to any one of claims 1 to 3, including a step (151) of recording the current (Gl) or corrected (Gl') value of the variable (G) in a data memory (M) of the first servo device in order to build up a log of a determined number of values and, prior to the correction step (150), a step (101) of generating the value of the correction coefficient (Kc) which is a function of the variability of the values taken from said log and the iteration frequency (SP) of the step (120) of reading the latest values of the variable (G) generated by the redundant servo devices.

6. Method (100) according to any one of the preceding claims, in which calculating the value of the corrective (Gc) is arranged so that said value of the corrective (Gc) does not, in absolute values, exceed a predetermined limit value (L).

7. Method (100) according to any one of the preceding claims, in which the redundant servo devices each include a PID corrector delivering three components of an output signal respectively describing a proportional action, an integral action and a derivative action, and in which the variable (G) consists of the component describing said integral action of said PID corrector.

8. Method (100) according to any one of the preceding claims, when the control system (30) includes redundant sources arranged to jointly deliver a plurality of setpoint values ($\overrightarrow{Gsp}$), including a step (102) for generating said setpoint (Gsp) such that the latter takes as a value:

   - one of the values of said plurality of values ($\overrightarrow{Gsp}$) when the control system (30) only includes two redundant sources;
   - the median of said plurality of values $\overrightarrow{(Gspr)}$ when said control system comprises at least three redundant sources.

9. Method (100) according to any one of the preceding claims, when the control system (30) includes redundant sources arranged to jointly deliver a plurality of values of the measurement data item ($\overrightarrow{Gs}$), including a step (103) for generating said measurement data item (Gs) such that the latter (Gs) takes as a value:

   - one of the values of said plurality of values ($\overrightarrow{Gs}$) when the control system only includes two redundant sources;
   - the median of said plurality of values ($\overrightarrow{Gs}$) when the control system includes at least three redundant sources.

10. Servo device of a system (30) for controlling an actuator (TS), said system (30) including a plurality of redundant servo devices (FC-1, FC-2, FC-3) each generating a value (Δ1, Δ2, Δ3) of one and the same variable on the basis of one and the same setpoint (Gsp, $\overrightarrow{Gsp}$) and one and the same measurement data item (Gs1, Gs2, Gs3), said redundant servo devices (FC-1, FC-2, FC-3) being in communication with each other (B) such that each servo device accesses, by reading, the latest values (Δ1, Δ2, Δ3) of said variable generated by the redundant servo devices, said servo device (FC-1, FC-2, FC-3) being arranged to implement a method (100) according to any one of the preceding claims.

11. Control system (30) for an actuator (TS) including a plurality of redundant servo devices (FC-1, FC-2, FC-3) according to the preceding claim, said command ($\vec{\Delta}$, Δ) being generated on the basis of the plurality of values (Δ1, Δ2, Δ3) of the variable generated jointly by the redundant servo devices.

12. System (30) according to the preceding claim, in which said command (Δ) is generated on the basis of:

   - one of the values of said plurality of values ($\vec{\Delta}$, Δ1, Δ2, Δ3) of the variable generated by the redundant servo devices when said plurality of values ($\vec{\Delta}$, Δ1, Δ2, Δ3) only comprises two values;

- the median of said plurality of values ($\vec{\Delta}$, $\Delta 1$, $\Delta 2$, $\Delta 3$) of the variable generated by the redundant servo devices when said plurality of values ($\vec{\Delta}$, $\Delta 1$, $\Delta 2$, $\Delta 3$) comprises at least three values.

13. Vehicle (10) for a load constituted by a pilot, a passenger and/or goods or merchandise including one or more actuators in the form of at least one thrust unit (TSa, TSb, TSc, TSd) for moving said vehicle (10) a command ($\vec{\Delta}$, $\Delta$) for which is generated by a control system (30) according to the preceding claim.

14. Vehicle (10) according to the preceding claim consisting of an aircraft (10).

15. Computer program product including one or more program instructions that can be interpreted by a processing unit (Ut) of one servo device from among a plurality of redundant servo devices (FC-1, FC-2, FC-3) of a system (30) for controlling an actuator (TS), said program instructions being capable of being loaded in a non-volatile memory (M) of the servo device and designed such that the execution of said instructions by said processing unit (Ut) causes the implementation of a method (100) according to any one of claims 1 to 9.

16. Computer-readable storage medium including the instructions of a computer program product according to the preceding claim.

FIG. 1

FIG. 1A

TSa

12a-e

12a-s

19a-3, 30a

19a-2

19a-6

12a-o

19a-1

19a-5

AL12a'

AL12a"

19a

19a-4

r

r

AL12a

FIG. 2

20

21d

22d

21

22

21b

22b

23

Gsp    CL    Gsp

FIG. 3

FIG. 3A

FIG. 4

FIG. 5

24

FIG. 6

FIG. 7

FIG. 7A

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0645026 A1

- EP 3495262 A1